# EUROPEAN PATENT SPECIFICATION

(11) **EP 0 886 949 B1**
(45) Date of publication and mention of the grant of the patent: **09.05.2007**
(21) Application number: 97908617.0
(22) Date of filing: 04.03.1997
(51) Int. Cl.: H04M 1/72, H04Q 7/32

(54) **A MULTI-FUNCTION MOBILE TELEPHONE STATION**
MULTIFUNKTIONALES MOBILES FERNSPRECHGERÄT
STATION TELEPHONIQUE MOBILE MULTIFONCTIONNELLE

(30) Priority: 14.03.1996 US 615457
(43) Date of publication of application: 30.12.1998
(73) Proprietor: TELEFONAKTIEBOLAGET LM ERICSSON (publ), 164 83 Stockholm (SE)
(72) Inventor: WENDELRUP, Heino, S-214 34 Malmö (US); SALLENHAG, Martin, S-224 72 Lund (SE); GARDENFORS, Torbjörn, S-211 50 Malmö (SE)
(74) Representative: Asketorp, Göran
(86) International application number: PCT/SE1997/000362
(87) International publication number: WO 1997/034402

(56) References cited:
- EP-A- 0 550 151
- EP-A- 0 563 864
- WO-A-87/00718
- WO-A-94/29966
- DE-A- 3 723 620
- DE-A- 3 737 647
- DE-A- 4 107 728
- DE-A- 4 118 992
- GB-A- 2 289 192
- US-A- 5 191 602

## Description

### CROSS-REFERENCE TO RELATED APPLICATIONS

The following patent applications describe related subject matter in greater detail: U.S. Patent Application Serial number 08/476, 504, entitled "MODULAR UNIT HEADSET", filed June 7, 1995 Publication No-AU-725 749 B inventors: Nils Rutger Rydbeck and Per Stein); U.S. Patent Application Serial Number 08/471,606, entitled "ELECTRONIC EQUIPMENT AUDIO SYSTEM", filed June 6, 1995 Publication No. AU-725 950 B ; U.S. Patent Application Serial Number 08/577,086, entitled "IDENTIFICATION OF MOBILE CALLS WITHIN A MOBILE TELEPHONE SYSTEM" filed December 22, 1995 Publication No. WO-9724007 inventor: Eric Valentine); and U.S. Patent Application Serial No. 08/353,966, entitled "MODULAR RADIO COMMUNICATIONS SYSTEM, filed December 12, 1994 Publication No-WO-9421058 inventor: Per Stein).

### BACKGROUND OF THE INVENTION

### Technical Field of the Invention

The present invention relates to communication systems and, more particularly, to a multi-function mobile station.

### Description of Related Art

Recent advances in wireless telecommunications have been multi-faceted, resulting in a myriad of new products and services. In the mobile cellular telecommunications area, some of the new services include both private services usually provided within a home or business environment for private mobile subscribers and public services provided through a public land mobile network for public mobile subscribers. Both private and public mobile service may be provided on a cellular basis, with mobile subscribers being allowed to roam between the geographic coverage areas of different base stations of each of the private and public systems.

Private mobile service is typically provided through a private mobile telephony network that is implemented using a private cordless system standard such as the Cordless Telephone Standard 2 (CT-2). Private telephony systems may be provided as stand-alone networks or connected to a fixed telephony network.

Public mobile service, on the other hand, is generally provided through a cellular telecommunications network using one of the common cellular transmission standards such as the Advanced Mobile Phone Service (AMPS) System Standard, the Personal Communications System (PCS) Standard, or the Global System for Mobile Communication (GSM) Standard.

Another direction in which there have been related developments is the area of cordless telephony products. Cordless telephone communications systems that are connected to a public switching telephone system (PSTN) have been known for some time. Cordless telephones operate utilizing a portable telephone unit in communication with a base station through a pair of radio frequency (RF) transceivers in the portable unit and in the base station. When the device is operable and a call is placed, dial tone and voice signals are transmitted from the RF transmitter in the portable unit to the RF receiver in the base station, and then over the PSTN lines in the ordinary manner. Similarly, when a call is received, the voice signals are transmitted from the RF transmitter in the base station to the RF receiver in the portable unit.

Although cordless telephones are convenient in that they allow telephone communication without the impaired-mobility imposed by a cord, they still require, like conventional corded telephones, usage of at least one hand to hold the portable unit for operating. Recent attempts that address the limitations of conventional cordless telephones have resulted in headset-like portable units that allow hands-free operation. In U.S. Pat. No. 4,882,745 to Silver, a "cordless headset telephone" is described in which only a single earphone is included to cover one ear while leaving the other ear open. Another related device is disclosed in U.S. Pat. No. 4,741,030 to Wilson, wherein a cordless headset is provided with a dial board positioned near the microphone for easy viewing by the user. As in the Silver device, the Wilson device does not disclose the use of two earphones and a volume control to enhance sound quality and to block external ambient noise. Another cordless telephone headset using only a single earphone is disclosed in U.S. Pat. No. 4,484,029 to Kennedy.

A recent improvement over these above-mentioned cordless telephone headsets is described in U.S. Pat. No. 5,113,428, wherein the portable unit is totally contained in a headset having its own push button key pad, related control buttons, a rechargeable battery, an RF transceiver and two earphones with volume control.

A pending U.S. Patent Application 08/476,504 entitled "MODULAR UNIT HEADSET", describes an integrated system wherein a host electronic system, coupled to a PSTN, is capable of communicating with a headset by both wireless and wired means due to a modular unit attached to it. In yet another U.S. Patent Application, entitled "ELECTRONIC EQUIPMENT AUDIO SYSTEM", describes a module port having a module connector, that is capable of communicating with a microphone via wireless and wired means.

It is readily apparent that a logical progression of these multi-faceted advances is towards increased inter-operability and modularized integration of multiple physical devices so as to enhance human operator convenience. For example, it would be an advantage to have a mobile station equipped with a modular unit that is capable of communicating with a cordless phone base station so that it can operate as an extension of the cordless phone to effectuate landline communication. It would be of further advantage to have a wireless headset that is capable of communicating on a single protocol with both the mobile station and cordless phone base station. In such a system, the human operator has the benefit of hands-free operation of multiple telecommunications devices without having to interchange different modular units. Additionally, it can be readily appreciated that it would be of significant advantage to inter-operably integrate an electronic data terminal that is capable of transmitting and receiving audio signals into such a local area communication system (LACS) whereby the utility of the terminal is further maximized. It is apparent that such an electronic data terminal can be a multimedia computer, which in turn may be stand-alone or in a Local Area Network, a pager, or a hand-held data organizer. Further, integrating a conventional phone answering machine that is operable to play back an out-going greeting or a recorded caller message and to record an in-coming message, into the LACS will undoubtedly enhance operator convenience and the use of the device.

Moreover, it can be seen that the use of a mobile station while driving an automobile is enhanced further if the received audio signal is transmitted to an external receiver such as an automobile speaker system. Also, the use of an answering machine in connection with a mobile station would greatly increase user flexibility and convenience.

Although one can readily appreciate the aforementioned advantages in providing a multi-functional mobile station, the current mobile stations are not equipped with the requisite circuitry to implement these advantageous features. The current single-mode mobile stations, capable of receiving and transmitting communication signals using a single protocol, e.g., GSM, are equipped with a receive path and a transmit path, wherein the receive path terminates in an internal earphone and the transmit path is connected to an internal microphone. As an improvement in functionality, it is possible to selectably re-route the incoming communication signal to an external receiver, for example an automobile, speaker system. In a similar fashion, it is also possible to establish a selectable connection between the transmit path of the mobile station and an external transmitter. Base-band switches inside the mobile station control the path of the signals so that the switches can be set to use either the internal earphone and microphone or an external device such as a hands-free unit with a proper local interface. For example, US-A-5 913 163 entitled "AN INTEGRATED LOCAL COMMUNICATION SYSTEM", describes in one aspect a wireless headset engaged in a wireless connection with a mobile station adapted with a local interface unit, also described therein.

The current mobile stations can also be of dual-mode, for example, the PCS/AMPS type, or dual-band, for example, the GSM900/GSM1800 type, or any combination thereof, wherein either two or multiple transceivers are housed together such that a single transceiver is in operation at a time effectuating communication using a single protocol. For example, such a mobile station can be equipped with one GSM transceiver and one DECT transceiver. The phone can be put in either mode by effectuating a switch which may be either software-programmable or controlled by the user. It is also possible to provide external device connectability in these multi-band/multi-mode mobile stations.

It is clear that the base-band switching schemes of current mobile stations allow re-routing of the non-local network communication signals between the mobile station and the external device selectably connected thereto in a master-slave relationship. However, there is yet another way of realizing enhanced functionality of a mobile station, if the base-band switches internal thereto are capable of selectably and independently placing the mobile station microphone and earphone in a communicative relationship, respectively, with an external output device and an external input device such that the microphone is transmitting signals to the external output device via an output node provided with the mobile station and the earphone is receiving signals from the external input device via an external input node also provided with the mobile station, and wherein the mobile station is disassociated from non-local network communication. Further, the external input device and the external output device may be housed together in a single communication device. Hereinafter, such non-network communication between the mobile station and the device is referred to as local communication and the device is called a local device. Further, it is apparent that it is advantageous to provide a mobile station with an input-output node pair as described hereinabove, that can selectably re-route non-local network signals to external devices (hereinafter "external device mode" or "EDM") and also selectably engage in local communication with those devices (hereinafter "local device mode" or "LDM") as described hereinabove via the same input-output node pair. Moreover, it may be appreciated that utilization of the same input-output node pair for both EDM communication and LDM communication may render possible usage of a single communication medium. The base-band switching schemes in the current mobile stations do not allow such multi-device connectability using a common input-output node pair wherein a single mobile station with a transceiver may be selectively linked in different modes to an external device using one medium of communication. The method and apparatus of the present invention and various components thereof provide such advantages.

EP-B1-0550151 relates to a digital mobile radio communication apparatus having a speech signal testing function and a data transmitting and receiving function and, a digital radio communication apparatus capable of reducing the number of terminals to be connected to external equipment. The speech signal testing function and the data transmitting and receiving function share common terminals and common switches connected to the terminals. The pair of terminals are selectively used as speech signal test terminals or data transmit and receive terminals via switches or similar means.

GB-A-2289192 relates to a portable telephone set, usable for mobile communication and capable of tentatively storing memo information by user's voice (speech) signals during communication without being heard by the opposite person in the communication. The portable telephone comprises a receiving section for receiving a radio signal and sending out the modulation output thereof to a receiver, a transmitting unit for modulating a voice signal input from a transmitter and transmitting the voice signal as a radio signal, a voice memory unit for recording the voice signal; and a switch for a tentatively inhibiting a coupling of the output voice signal of transmitter to the transmitting section while allowing a coupling of the output voice signal to the voice memory unit for storing thereof. The switch may be a first push-button switch operable by the user of the portable telephone set. A second push button switch operable by the user of the telephone set is also provided for switching the input to the receiver between a demodulation output of the receiving section and a read-output of the voice unit.

### SUMMARY OF THE INVENTION

In one aspect of a presently preferred exemplary embodiment, the present invention includes a radio transceiver with switching circuitry comprising a first switch element actuatable to operably couple a microphone associated with the radio transceiver at least alternately to an external output device via an output node and a transceiver circuit associated with the radio transceiver. In addition, the switching circuitry of the radio transceiver comprises a second switch element actuatable to operably couple a speaker associated with the radio transceiver at least alternately to the transceiver circuit associated with the radio transceiver and an external input device via an input node.

In another aspect, the present invention relates to a mobile station operably associated with at least one PLMN, comprising a transmitter and a receiver for receiving and transmitting non-local communication signals over the PLMN, an earphone within which is disposed a speaker, which earphone is operably connectable to the receiver, and a microphone operably connectable to the transmitter. Moreover, the mobile station comprises a switching arrangement whereby the mobile station is operable for external communication with, thereby routing the non-local communication signals to, an external device via an input-output node pair by selectably altering the positioning of a first subset of a plurality of base-band switches. In yet another aspect, the mobile station is operable for local communication with a local device via the same input-output node pair by selectably altering the positioning of a second subset of the plurality of base-band switches. In a still further aspect, by combining the actuation of the first subset of the base-band switches with that of the second subset of the base-band switches, the mobile station is operable in a multi-party communication mode wherein a hands-free device user can be conferenced with the mobile station user and its network party over the PLMN. That is, each of the three parties can talk and listen to one another. The hands-free device operates herein as a local device when a local communication link between the mobile station and the hands-free device is established. Also, the hands-free device operates herein as an external device when the non-local communication path (including the "external communication" link between the mobile station and the hands-free device) is established between the network party and the hands-free device via the mobile station in a master-slave arrangement. In both aspects described hereinabove, the communication link between the mobile station and the hands-free device is established via the same input-output node pair provided with the mobile station and may be effectuated upon a pre-selected medium. Accordingly, both external communication signals and local communication signals, as contemplated herein, may be effectuated upon a single communication protocol implemented using the same communication medium. Further, the communication medium can be an electro-magnetic wave, a radio wave, a microwave, a magnetic wave, an infra-red wave, an optical wave medium, or a wire-line medium.

The external device and the local device, in a presently preferred exemplary embodiment of the present invention, include a plurality of communication devices, at least one of which may be associated with an external or non-local communications network. The user of a communication device, either in the EDM or LDM arrangement, will be hereinafter referred to as "accessory user." It is contemplated herein that the plurality of communication devices include, but not limited to, an electronic data terminal such as a computer capable of receiving and transmitting audio signals, selectably associated with a Local Area Network (LAN) or a Wide Area Network (WAN); a paging device; a hand-held organizer; a network phone interface device, associated with a PSTN, a hands-free communication device such as a wireless headset; a speaker system of the type including a microphone and a phone answering machine. Further, the computer may be a multimedia computer of the type including graphic, video and audio interfaces. The network phone interface device associated with the PSTN can in turn be a home base station, or a cordless phone base station, or a corded phone. US-A-5 913 163, entitled "AN INTEGRATED LOCAL COMMUNICATION SYSTEM," describes in greater detail the aforementioned electronic data terminal and other communications devices to be integrated in a LACS.

In an additional aspect of a presently preferred embodiment of the present invention, either the non-local, local or external communication signals may be either analog or digital, suitably modulated according to known methods. Furthermore, these signals may comprise voice, video, or data, or any combination thereof.

In a further aspect, the present invention includes a multi-band/multi-mode mobile station, associated with at least two cellular mobile telecommunications networks, the mobile station comprising a plurality of base-band switches for effectuating multiple signal pathways necessary for non-local cellular, external and local communication. It is apparent that the multi-band/multi-mode mobile station is of the type described hereinabove. In yet another aspect, the external and local communication devices selectably comprise at least one wireless headset, a speaker system, a clip-on microphone, a phone-answering machine, a computer and a network interface device associated with a public switching telephone network (PSTN). It will be readily appreciated upon reference hereto that many modifications of and variations to these communication devices are also amenable to be placed in a communicative relationship with the mobile station having the switching arrangement of the present invention.

Accordingly, it is an object of the present invention to provide a multi-functional mobile station (hereinafter "MMS") associated with at least one PLMN wherein the MMS is selectably operable as a cordless phone handset to place or receive calls over the PSTN. It is a further object to provide a wireless headset that is selectably operable as a wireless extension to the MMS. It is a still further object of the present invention to selectably route cellular communication signals from the MMS to an automobile speaker system of the type including a microphone. It is a yet another object to provide a communication link between the MMS and a phone-answering machine, and between the MMS and a multimedia computer. It is a still further object of the present invention to provide a communication link between the MMS and an electronic data terminal such as one described hereinabove.

These objects are achieved by a switching circuitry and method as defined in the appended patent claims 1 and 32.

### BRIEF DESCRIPTION OF THE DRAWINGS

A more complete understanding of the method and apparatus of the present invention may be had by reference to the following detailed description when taken in conjunction with the accompanying drawings wherein:
FIGURE 1 illustrates a network interconnection of multiple Public Land Mobile Networks (PLMNs) to a Public Switching Telephone Network (PSTN);
FIGURE 2 is a block diagram of a PLMN;
FIGURE 3 is a block diagram of a single-mode mobile station with base-band switches allowing an external application;
FIGURE 4 is a block diagram of a dual-mode mobile station with base-band switches allowing an external application;
FIGURE 5 is a block diagram of a presently preferred embodiment of the present invention with cross-connect base-band switches;
FIGURE 6 is a block diagram of an aspect of a presently preferred embodiment of the present invention;
FIGURE 7 is a block diagram of another aspect of a presently preferred embodiment of the present invention;
FIGURE 8 is a block diagram of yet another aspect of a presently preferred embodiment of the present invention;
FIGURE 9 is a block diagram of a possible exemplary application of a presently preferred embodiment of the present invention;
FIGURE 10 is a block diagram of yet another possible exemplary application of a presently preferred embodiment of the present invention;
FIGURE 11 is an exemplary decision tree that may be used in accordance with the present invention to selectably operate a multi-function mobile station; and
FIGURE 12 is an exemplary decision tree that may be used to operate a multi-function mobile station in a multi-party-mode communication arrangement.

### DETAILED DESCRIPTION OF THE DRAWINGS

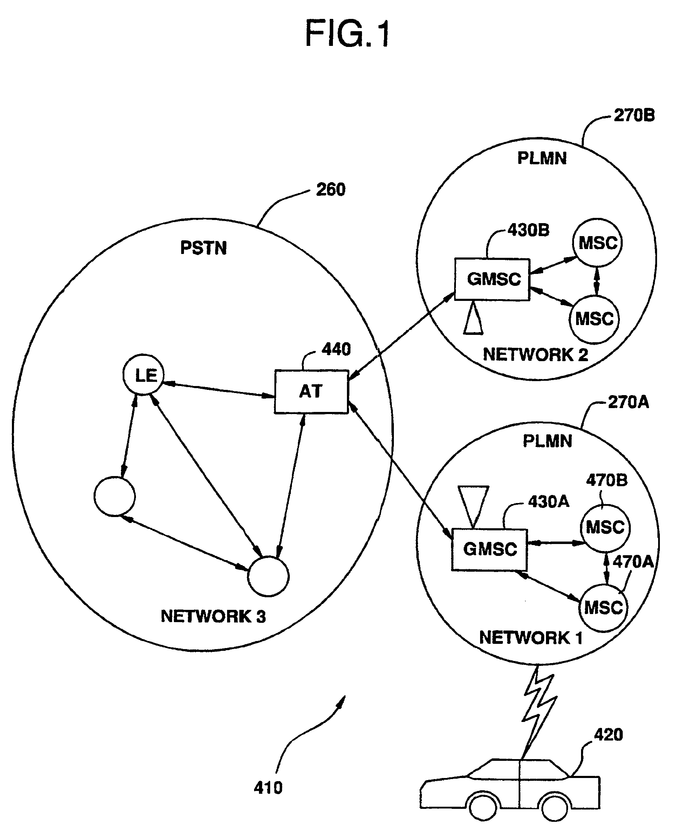

FIG. 1 depicts an interconnection of multiple Public Land Mobile Networks (PLMNs) to a Public Switching Telephone Network (PSTN). Reference numeral 410 generally illustrates a possible network interconnection of multiple PLMNs 270A, 270B to PSTN 260, according to an aspect of the presently preferred exemplary embodiment of the present invention. A mobile subscriber (MS) 420 is associated with one of the PLMNs as its Home PLMN 270A. Within each PLMN 270A, 270B, there are multiple mobile switching centers (MSCs) 470A, 470B, servicing the geographical areas covered by the network. The mobile subscriber 420 who is served by its Home PLMN 270A is capable of communicating with other wireless and wire-line terminals by connecting with the PSTN 260 through a Gateway Mobile Switching Center (GMSC) 430A. An access tandem (AT) 440 associated within the PSTN 260 routes the mobile calls generated from the PLMN 270A to wire-line terminals serviced by one of its exchanges within the PSTN 260, or to another PLMN 270B by way of its GMSC 430B. If the mobile subscriber 420 travels outside the coverage area of its Home PLMN 270A and roams into the geographical area covered by an adjacent PLMN 270B, an interexchange handoff occurs between the Home PLMN 270A and the adjacent PLMN 270B whereby telecommunications service continues to be provided to the MS 420 from the adjacent PLMN 270B as a roaming subscriber.

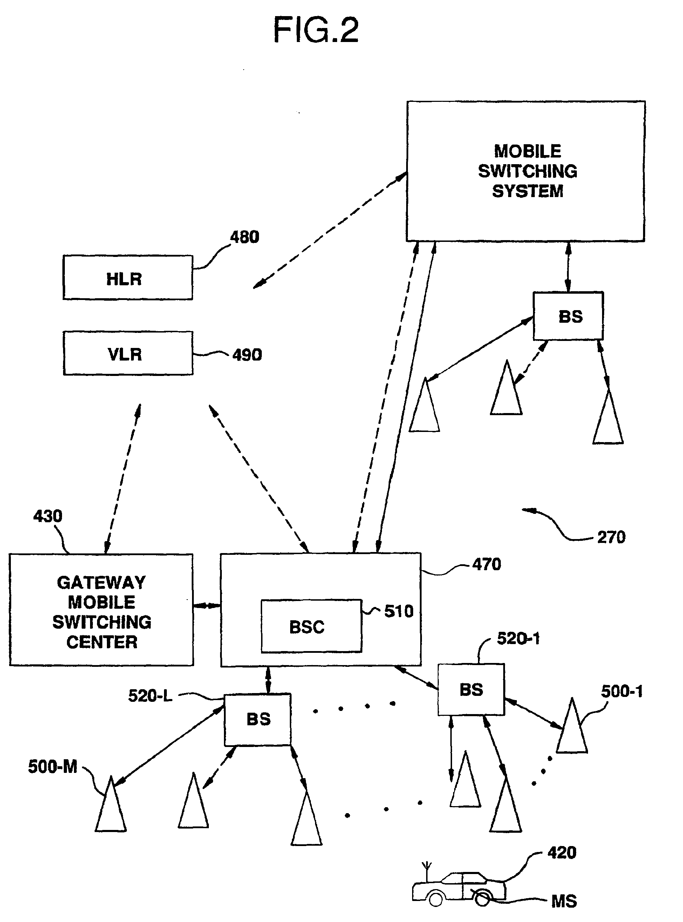

FIG. 2 is a block diagram of the PLMN 270 including the mobile switching center 470. In addition, the PLMN 270 comprises a Home Location Register (HLR) 480, a Visitor Location Register (VLR) 490 and a number of antenna systems 500-1 through 500-M. The mobile switching center 470 is also generally known in the art as a base station system, and includes a base-station controller 510 and one or more of base-station transceiver stations(BS) 520-1 through 520-L. Each of the base-station transceiver stations is associated with a subgroup of the antenna systems 500-1 through 500-M. In order for the mobile subscriber 420 to be allocated to a home network, an entry in the HLR 480 is made. Whenever the MS 420 is switched on, and possibly at regular intervals thereafter, it will register with the PLMN 270 and give its location area.

The MSC 470 communicates directly with the HLR 480 and the VLR 490 for subscriber information and transfers calls from one BS to another as the MS 420 travels within the geographical area covered by the PLMN 270. Further, the GMSC 430 acts as a gateway to allow access to other wire-line terminals associated with the PSTN 260 or wireless mobile subscribers associated with other PLMNs.

The establishment of a cellular call within and without the PLMN 270 is typically effectuated via Signaling System No. 7 (SS7) network protocols utilizing network addresses. U.S. Patent Application, "IDENTIFICATION OF MOBILE CALLS WITHIN A MOBILE TELEPHONE SYSTEM", filed December 22, 1995, describes a method and system for utilizing network addresses to construct a unique call identifier for a cellular call.

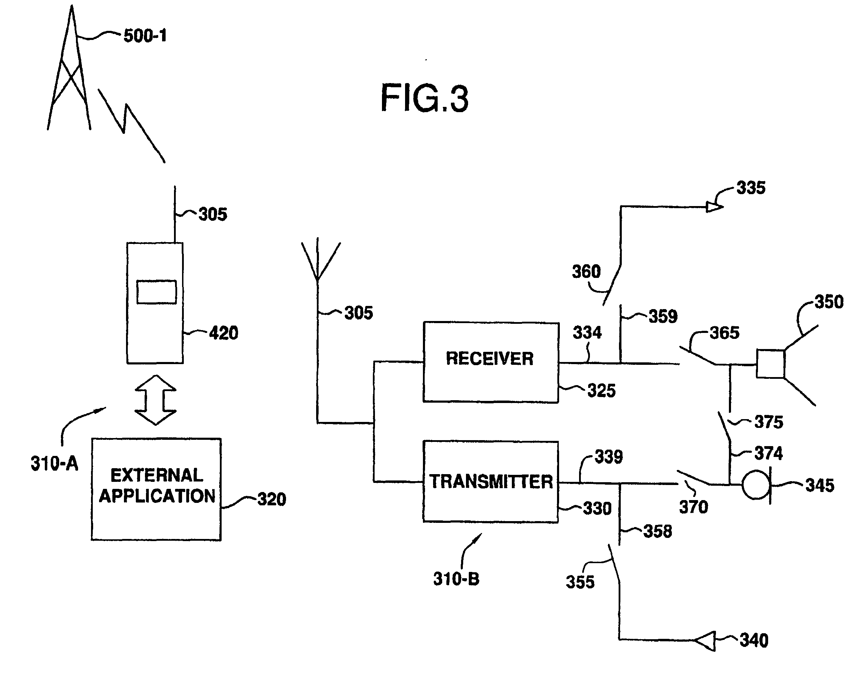

Referring now to FIG. 3, reference numeral 310-A generally depicts a conventional single-mode mobile station 420 with an external application 320. The mobile station 420 is operably associated with a base station antenna 500-1 through a mobile antenna 305. Reference numeral 310-B generally depicts a block diagram of the conventional single-mode mobile station 420. The mobile antenna 305 is operably coupled to a receiver 325 and a transmitter 330. A receive path 334 is operably disposed between the receiver 325 and an earphone 350. A receive switch 365 is located on the receive path 334 to selectably effectuate a signal path to the earphone 350. A transmit path 339 is operably disposed between the transmitter 330 and a microphone 345. A transmit switch 370 is located on the transmit path 339 to selectably effectuate a signal path from the microphone 345. To facilitate a side-tone transmission path 374 between the microphone 345 and the earphone 350, there is a side-tone switch 375 that allows feedback of a pre-defined amount of microphone signal to the earphone 350.

Continuing with FIG. 3, to facilitate the external application 320, the mobile station 420 is further provided with a pair of switches, an output switch 360 and an input switch 355. The output switch 360 is disposed on an output path 359 to selectably route signals to an output node 335 such that the signals are capable of being transmitted from the mobile station 420 to an external output device (not shown). The input switch 355 is disposed on an input path 358 to selectably route signals, generated by an external input device (not shown) and transmitted via an input node 340.

Still referring to FIG. 3, conventional audio signals to the mobile station 420 from the base station antenna 500-1 are received by the mobile antenna 305. By closing the receive switch 365 and the transmit switch 370, and by keeping open the output switch 360 and the input switch 355, conventional cellular communication may be established between the mobile subscriber and an outside party. By reversing the base-band switch configuration, that is, by keeping open the receive switch 365 and the transmit switch 370, and by closing the output switch 360 and the input switch 355, the conventional audio may be selectably routed to the output node 335 and onwards to the external output device (not shown); and external signals generated by the external input device (not shown) may be selectably transmitted to the transmitter 330 via the input node 340 for the up-link to the base station antenna 500-1.

Furthermore, it is apparent that by combining both configurations, that is, by simultaneously closing both sets of switches (355, 360 and 365, 370) it is feasible to include an accessory user in the communication between the mobile station user and a network party. By closing the input switch 355 and the transmit switch 370 simultaneously, the signal output from the transmitter 330 (hereinafter "TX") will be the sum of the microphone signal from the microphone 345 (hereinafter "MIC") and the external input signal via the input node 340 (hereinafter "audio to mobile station" or "ATMS"). This makes it possible for the mobile station 420 to mix a MIC signal with an ATMS signal and send the mixed signal over the PLMN. Similarly, by closing the output switch 360 and the receive switch 365 simultaneously, the signal output from the receiver 325 (hereinafter "RX") is fed as a signal to the earphone 350 (hereinafter "EAR") and as an external signal to the output node 335 (hereinafter "audio from mobile station" or "AFMS"). This makes it possible to simultaneously connect the signal from the network party over the PLMN to the earphone 350 (that is, the mobile station user) and to the accessory user. However, in this arrangement, the accessory user and the mobile station user cannot communicate with each other.

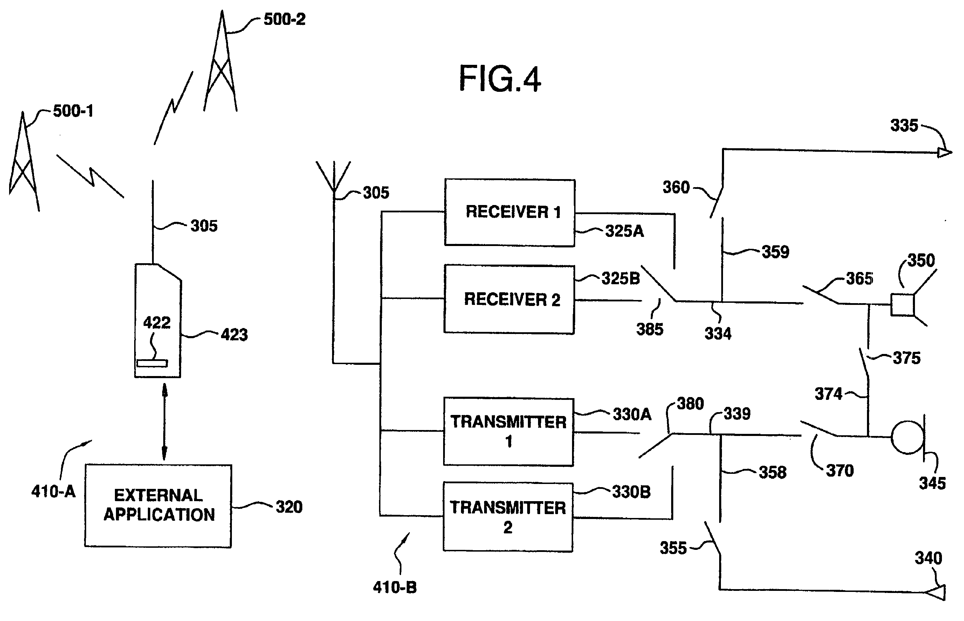

FIG. 4 illustrates an arrangement, generally at 410-A, of a conventional dual-band mobile station 423 with the external application 320. The mobile antenna 305 may be tunable to two separate frequency bands in which the communication signals are transmitted bi-directionally. As is well known in the art, in some alternative embodiments there may be two different mobile antennas (not shown) corresponding to the two bands for facilitating signal transfer. The base station antennas 500-1 and 500-2 are operably associated with two different PLMNs (not shown) with separate communication standards. Conventionally, the dual-band mobile station 423 may be provided with a selection switch 422 so that the user may select between the two standards at any time. It is apparent that although the dual-band mobile station 423 is shown by way of providing a clearer example, a multi-mode/multi-band mobile station of the type described hereinabove can equally be accommodated in this description. Further, selection among multiple modes or bands may be accomplished automatically by having a software-programmable switching mechanism.

Continuing with FIG. 4, reference numeral 410-B refers generally to a block diagram of the dual-band mobile station with associated base-band switching arrangement in connection with the external application 320. The mobile antenna 305 is operably coupled to a pair of receivers, a first receiver 325A and a second receiver 325B, for receiving an incoming communication signal. The internal receive path 334 is selectably established by operably coupling the earphone 350 to either the first receiver 325A, associated with a first band, or the second receiver 325B, associated with a second band, using a receive selection switch 385 in conjunction with the receive switch 365. In a similar fashion, the internal transmit path 339 is selectably established by operably coupling the microphone 345 to either the first transmitter 330A, associated with the first band, or the second transmitter 330B, associated with the second band, using a transmit selection switch 380 in conjunction with the transmit switch 370.

Still referring to FIG. 4, the receive switch 365 and the transmit switch 370 operate in the same manner as discussed hereinabove relative to the single-mode mobile station 420 in FIG. 3. Analogously, the output switch 360 and the input switch 355 are used to selectably establish the output path 359 and the input path 358, respectively. Further, the side-tone transmission switch 375 may be preferably disposed between the microphone 345 and the earphone 350 as discussed hereinabove. Moreover, by simultaneous actuation of the switch pairs, 355/360 and 365/370, as described hereinabove with reference to FIG. 3, it is feasible to selectably place an accessory user in a communicative relationship with any of the network parties over the multiple PLMNs.

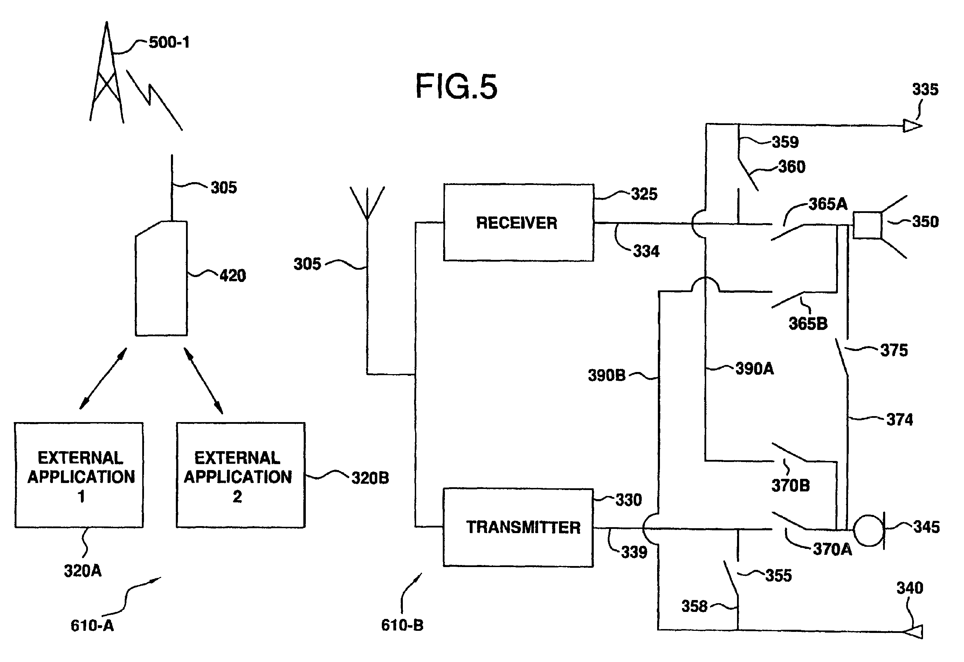

Referring now to FIG. 5, reference numeral 610-A refers generally to an arrangement of a multi-function mobile station (MMS) 420 in accordance with an aspect of the present invention. The mobile station 420 is operably associated with the base station antenna 500-1. Further, the mobile station 420 is selectably operable in multiple external applications, 320A and 320B.

Reference numeral 610-B depicts generally a block diagram of the mobile station 420 with associated base-band switching according to a presently preferred exemplary embodiment of the present invention. The receiver 325 and the transmitter 330 are operably coupled to the mobile antenna 305 for facilitating the up-link and down-link communication signal transfer between the mobile station 420 and the base station antenna 500-1. The earphone 350 is operably connected to the receive path 334 such that the receive switch 365A is disposed between the receiver 325 and the earphone 350. The microphone 345 is operably connected to the transmit path 339 such that the transmit switch 370A is disposed between the transmitter 330 and the microphone 345.

Continuing with FIG. 5, reference numeral 390A refers to a first cross-connect path selectably establishable between the microphone 345 and the output node 335 according to a presently preferred exemplary embodiment of the present invention. Further, according to an aspect of the present invention, the first cross-connect path 390A comprises at least one switch, herein referred to as a first local connection switch 370B, disposed between the microphone 345 and the output node 335.

Still continuing with FIG. 5, reference numeral 390B refers to a second cross-connect path selectably establishable between the earphone 350 and the input node 340 according to a presently preferred exemplary embodiment of the present invention. Further, according to an aspect of the present invention, the second cross-connect path 390B comprises at least one switch, herein referred to as a second local connection switch 365B, disposed between the earphone 350 and the input node 340. The side-tone transmission switch 375 may preferably be disposed between the microphone 345 and the earphone 350 in order to transmit a pre-defined portion of the signal generated by the microphone 345 to the earphone 350 along the side-tone transmission path 374.

Continuing further with FIG. 5, it can be readily appreciated by those skilled in the art upon reference hereto that the first cross-connect path 390A can be used to import communication signals from an external input device (not shown) via the input node 340 to the earphone 350 without using the internal receiver 325, and, in a similar fashion, the second cross-connect path 390B can be used to export to an external output device (not shown) via the output node 335 communication signals generated by the microphone 345 from the mobile station 420 without using the internal transmitter 330. Further, by selectably establishing communication paths, it will be appreciated that the mobile station 420 can be selectably be operable, according to a presently preferred exemplary embodiment of the present invention, with multiple external applications 320A and 320B, in addition to functioning as a regular mobile station operable with a PLMN for cellular communication.

In addition, owing to the independent actuation of the base-band switches as described herein, it is possible to achieve such enhanced functionality as a multi-party communication mode (hereinafter "MPM") wherein the disadvantage of not having a communicative relationship between the mobile station user and the accessory user, as mentioned in reference to FIGS. 3 and 4, is hereby overcome. As seen hereinabove, by simultaneously closing the switch pairs 355/360 and 365A/370A, while the accessory user and/or the MMS user can simultaneously communicate with a network party over the PLMN, neither can communicate with each other. However, because of the cross-connect paths 390A and 390B as described herein, it is also possible to simultaneously actuate additional switch pairs. By simultaneously closing the switch pair 365A/365B, thereby summing the RX signal from the receiver 325 and the ATMS signal received via the input node 340 into a composite EAR signal to be presented to the earphone 350, the MMS user can simultaneously listen to both the network party over the PLMN and the accessory user. Similarly, by simultaneously closing the switch pair 370A/370B, thereby connecting the MIC signal to the TX signal to be sent over the PLMN and to the AFMS signal to be exported to the output node 335, the MMS user can talk to both the accessory user and the network party over the PLMN. However, it can be readily seen that the accessory user cannot communicate with the network party. On the other hand, it can be appreciated that by simultaneously closing all the switch pairs, 355/360; 365A/370A and 365B/370B, an MPM communication can be achieved, wherein the MMS user can talk and listen to the accessory user and the network party; the accessory user can talk and listen to the MMS user and the network party; and, the network party in turn can talk and listen to the accessory user and the MMS user. Any of these communication links can be muted or disconnected by selectably opening the corresponding switch.

It can be readily appreciated upon reference hereto by one skilled in the art that it is possible to achieve both external communication and local communication without the use of the local connection switches, 365B and 370B, by providing bi-directional input/output nodes at 335 and 340 rather than the unidirectional nodes as shown and described hereinabove. Such a solution, however, can have several disadvantages such as compromised electrostatic discharge ("ESD") protection; unavailability of an MPM arrangement; and added complexity to the interface circuitry of the external/local communication devices.

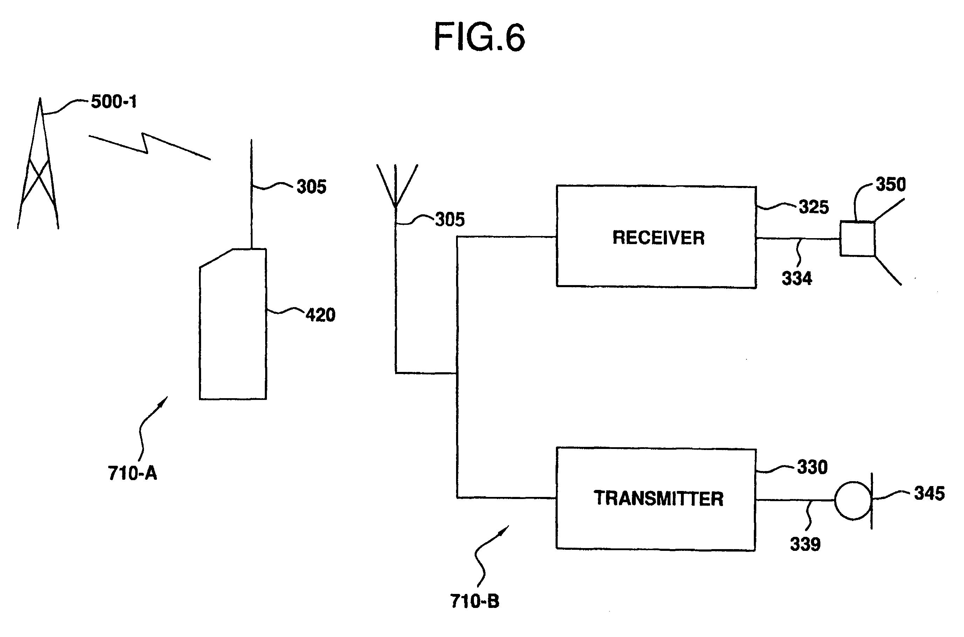

Referring now to FIG. 6, reference numeral 710-A generally depicts an arrangement of the multi-function mobile station 420 in accordance with the teachings of the present invention wherein the mobile station 420 is operable to receive and transmit cellular information over the base station antenna 500-1, operably associated with the PLMN (not shown). It can be readily appreciated that in this mode of functionality (hereinafter "mobile-station-mode" or "MSM"), the MMS 420 is operable like a regular mobile station for cellular communication. Referring now to the block diagram, generally shown at 710-B, the mobile antenna 305 is operably coupled to the receiver 325 and the transmitter 330. The receive path 334 is effectuated between the earphone 350 and the receiver 325 by closing the receive switch 365A (shown in FIG. 5) to receive and route the down-link information from the base station antenna 500-1 to the earphone 350. In a similar fashion, the transmit path 339 is effectuated between the microphone 345 and the transmitter 330 to route the up-link information from the microphone 345 to the base station antenna 500-1 by selectably closing the transmit switch 370A (shown in FIG. 5). The other base-band switches, namely, the local connection switches 365B and 370B, the input-output switches 355 and 360, respectively, are selectably positioned in open condition in this functional mode. Further, it can be appreciated that in an embodiment of the present invention the side-tone transmission 374 (not shown) can be preferably be effectuated to transmit a side-tone signal from the microphone 345 to the earphone 350.

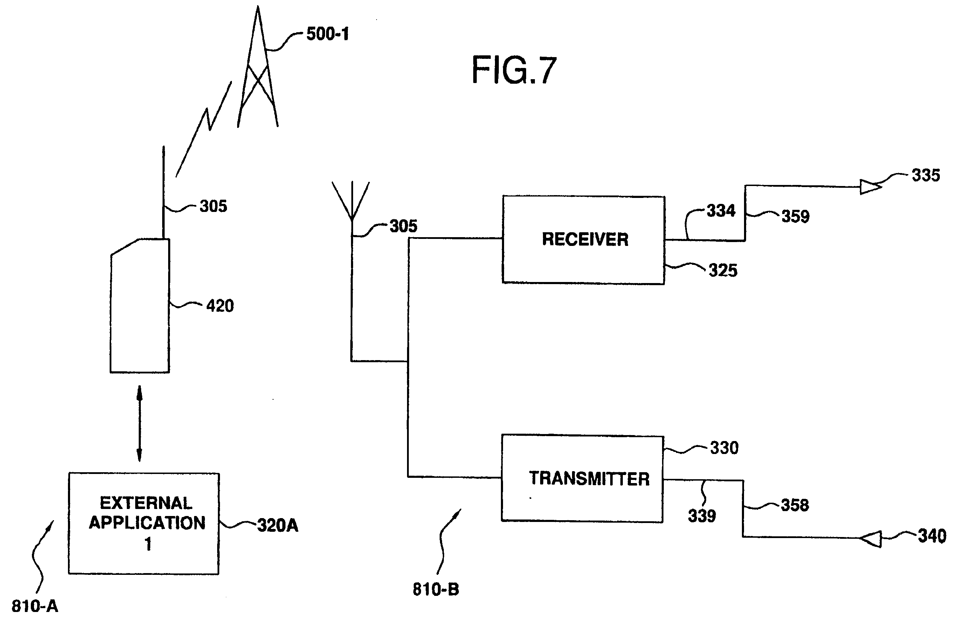

FIG. 7 illustrates another functional arrangement of the MMS 420 according to the teachings of the present invention. Reference numeral 810-A generally depicts an arrangement of the MMS 420 wherein the external application 320A is implemented in an aspect of the present invention. The MMS 420 is operably associated with the base station antenna 500-1 to receive and transmit cellular information which is routed to and from an external device (not shown). In this EDM arrangement, the external device and the MMS 420 may be disposed in a master-slave relationship, respectively.

The functional block diagram of the base-band switch arrangement is generally shown at 810-B. The mobile antenna 305 is operably coupled to the receiver 325 and the transmitter 330. The receive path 334 is operably connected with the output path 359 to selectably route the down-link information from the receiver 325 to the output node 335 which may then be communicated to the external device. In an analogous fashion, the transmit path 339 is operably connected with the input path 358 to route information communicated by the external device and transmitted via the input node 340. This information is then transmitted by the transmitter 330 via the mobile antenna 305 as the up-link information.

Still referring to FIG. 7, it can be appreciated that the EDM arrangement of the MMS 420 is selectably effectuated by closing the output switch 360 and the input switch 355; and further, by keeping open the receive switch 365A, the transmit switch 370A, the first local connection switch 370B, and the second local connection switch 365B. Further, it can be seen that in one aspect of the present invention, the external device can be hands-free equipment such as a wireless headset (not shown). As is known in the art, the down-link information from the receiver 334 can be suitably modulated so as to effectuate a wireless transmission from the output node 335 to the wireless headset. Similarly, the communication signals from the wireless headset or a separate microphone (not shown), can be suitably modulated according to known methods to be presented at the input node 340. U.S. Patent Application, entitled "AN INTEGRATED LOCAL COMMUNICATION SYSTEM", describes in one aspect a wireless headset engaged in a wireless connection with a mobile station adapted with a local interface unit.

Still continuing with FIG. 7, additionally, the external device in the EDM arrangement with the MMS 420 may, according to another aspect of the present invention, be a speaker system having a microphone associated therewith. For example, the speaker system can be of an automobile speaker system of the type including a microphone, wherein the down-link information from the receiver 325 is routed via the output node 335 to the automobile speaker system, the connection to which may be embodied simply as a wire connection. Analogously, the microphone can transmit information via the input node 340, the connection to which may also be embodied as a wire connection.

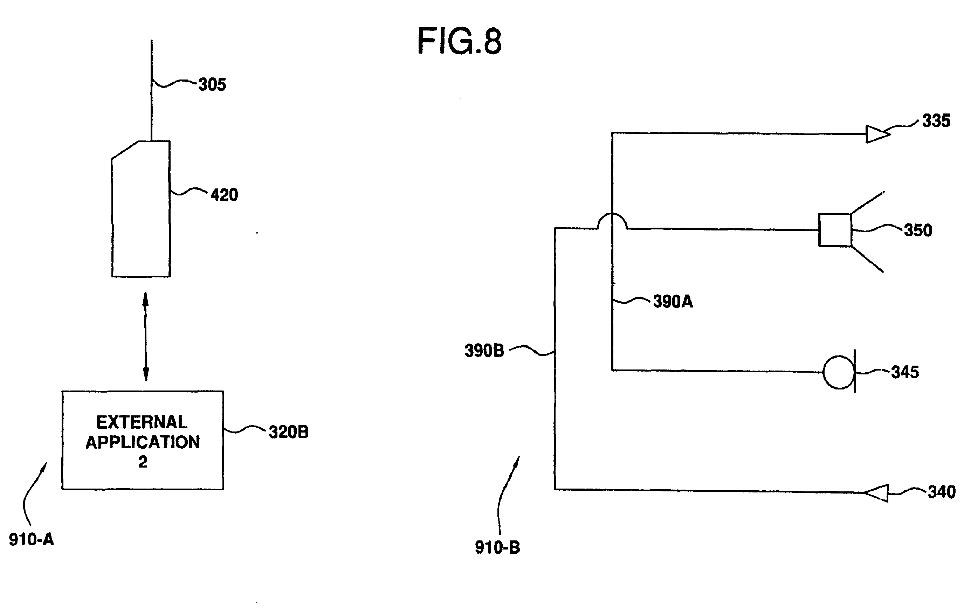

Referring now to FIG. 8, reference numeral 910-A generally depicts yet another aspect of the present invention having a different mode of functionality of the MMS 420 according to the teachings of the present invention. In this LDM arrangement, the MMS is operably engaged in the external application 320B and not associated with a PLMN for cellular communication.

The signal paths and base-band switch positioning for the LDM arrangement are shown generally at 910-B. The microphone 345 is operably selectably coupled to the output node 335 via the first cross-connect path 390A (shown in FIG. 5). The earphone 350, in a similar fashion, is operably selectably coupled to the input 340 via the second cross-connect path 390B (shown in FIG. 5). Although not shown herein, it can be readily appreciated by those skilled in the art that the side-tone transmission path 374 (shown in FIG. 5) may be established between the microphone 345 and the earphone 350 according to an aspect of the present invention.

Continuing with FIG. 8, the first cross-connect path 390A is effectuated by closing the first local connection switch 370B (shown in FIG. 5), and further, by keeping open the output switch 360 (shown in FIG. 5) and the transmit switch 370A (shown in FIG. 5). Similarly, the second cross-connect path 390B is effectuated by closing the second local connection switch 365B (shown in FIG. 5), and by keeping open the input switch 355 and the receive switch 365A (shown in FIG. 5). In LDM arrangement, the out-going local communication signal generated by the microphone 345 is routed to the output node 335 and the in-coming local communication signal transmitted via the input node 340 is routed to the earphone 350. While the cross-connect paths 390A and 390B are wire-line, the communication links between the MMS 420 and the local device may be effectuated upon a wireless medium after suitably modulating the in-coming and the out-going local communication signals.

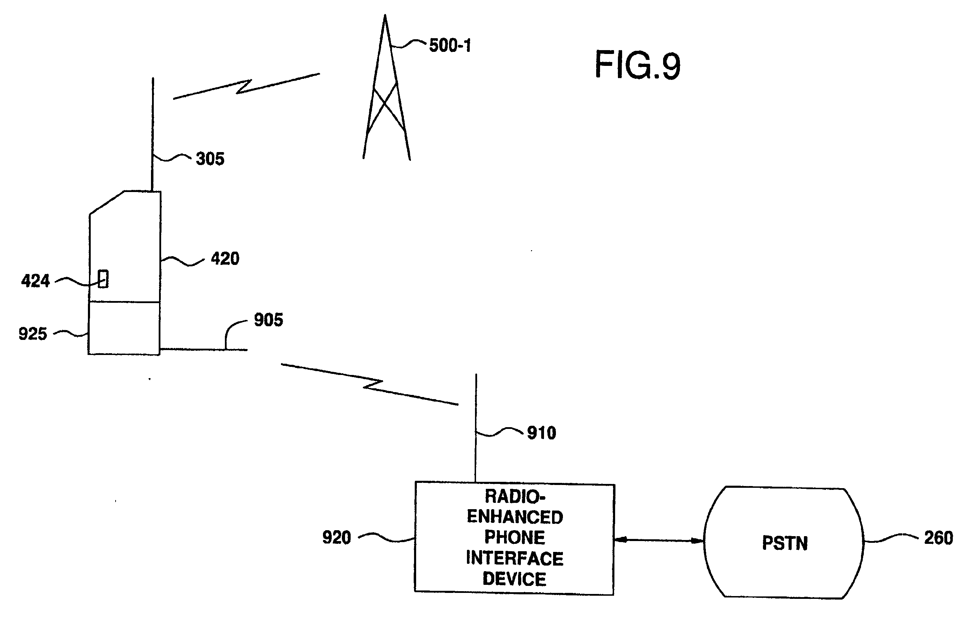

FIG. 9 depicts an exemplary application of the MMS 420 wherein the MMS 420 is selectably operable either in the MSM or the LDM arrangement. The MMS 420 is preferably equipped with an interface unit 925 which comprises a local antenna 905 for effectuating local communication upon a wireless medium with a radio-enhanced phone interface device 920. The radio-enhanced phone interface device 920 preferably comprises a phone antenna 910, and is operably associated with the PSTN 260 for landline communication.

Continuing with FIG. 9, in the LDM arrangement, the interface unit 925 receives out-going communication signals transmitted by the microphone 345 (shown in FIG. 5) internal to the MMS 420 and suitably processes and modulates them for wireless transmission to the radio-enhanced phone interface device 920. These signals are then sent over the PSTN 260 to a receiving party. Further, the interface unit 925 receives modulated in-coming communication signals from the radio-enhanced phone interface device 920 to be routed to the earphone 350 (shown in FIG. 5) in the MMS 420. These out-going and in-coming local communication signals are routed from and to the microphone 345 (shown in FIG. 5) and the earphone 350 (shown in FIG. 5), respectively, via the cross-connect paths 390A and 390B (shown in FIG. 5), as discussed hereinabove. U.S. Patent Application, entitled "AN INTEGRATED LOCAL COMMUNICATION SYSTEM", describes in greater detail an exemplary embodiment of the interface unit 925 and the radio-enhanced phone interface device 920.

Still continuing with FIG. 9, by selecting the MSM arrangement using selection switch 424, the MMS 420 may be placed in operable association with the base station antenna 500-1 to effectuate cellular communication over the PLMN. The selection switch 424 may be user-controlled, or it may be a software-programmable mechanism as described hereinbelow. The base-band switches will be positioned according to the teachings of the present invention as discussed hereinabove regarding FIGS. 5 and 6. It will be appreciated by persons of skill in the art upon reference hereto that although the selection switch 424 is operable for manual control of selection of the mode of operation of the MMS 420, it is possible to effectuate such mode selection via automatic or software-programmable means whereby, for example, whenever the MMS 420 is within an effective range associated with the radio-enhanced phone interface device 920, local communication for subsequent landline propagation may be made over the PSTN 260 in the LDM arrangement, and if the MMS 420 moves out of range, cellular communication over a PLMN may be made in the MSM arrangement.

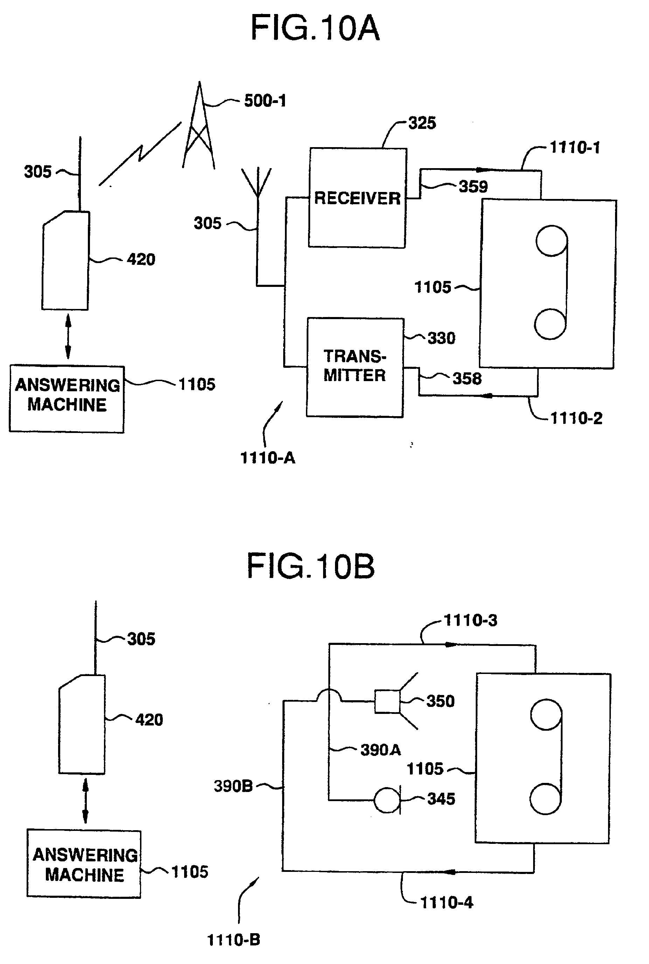

Referring now to FIG. 10, there is illustrated another exemplary application of an aspect of the present invention, wherein the MMS 420 is operably associated with a known telephone answering machine 1105. In this exemplary application the MMS 420 is selectably operable in either the EDM arrangement, shown generally at 1110-A or in the LDM arrangement, shown generally at 1110-B. In order for the user to record a greeting or an announcement which will be heard by a calling party upon reaching the answering machine 1105, the MMS 420 is placed in the LDM arrangement whereby the cross-connect paths 390A and 390B are established as discussed hereinabove. The user, speaking into the microphone 345 of the MMS 420, can record the announcement (or, the greeting) via a user record path 1110-3 that is operably connected to the first cross-connect path 390A. For play-back or verification of the recorded announcement, the user may activate the answering machine 1105 in known manner and pursuant thereto establish a user play-back path 1110-4 which, in the LDM arrangement, is operably connected to the second cross-connect path 390B. The user can then listen to the recorded announcement in the earphone 350.

Continuing with FIG. 10, reference numeral 1110-A refers to the operation of the MMS 420 in the EDM arrangement whereby a calling party over a PLMN may record a message upon reaching the user's answering machine 1105. According to one aspect of the present invention, when an in-coming non-local communication signal is down-linked from the base station antenna 500-1 and when the user's answering machine is on, the MMS 420 may be automatically placed in the EDM arrangement by selectively closing and opening the base-band switches as discussed hereinabove regarding FIG. 7. After reaching the answering machine 1105, the user-recorded announcement is played back to the calling party via the caller greeting path 1110-2 which is operably connected to the input path 358. The announcement signal is then routed to the transmitter for subsequent up-link to the calling party over the PLMN. The calling party may, then, opt to record a message to the user. The down-linked message signal is fed to the receiver 325 operably disposed on the output path 359. The signal, after suitable modulation, if necessary, as discussed hereinabove, is routed via a message record path 1110-1 to the answering machine 1105 for recording. The user, in the LDM arrangement, may select to listen to the recorded messages via the play-back path 1110-4 as discussed in the foregoing. It can be readily appreciated that the path pair 1110-1/1110-3 is connected to the same output node 335 (shown in FIG. 5) and the path pair 1110-2/1110-4 is connected to the same input node 340 (shown in FIG. 5), thereby allowing the use of one single communication medium for both the EDM and LDM arrangements, if so desired.

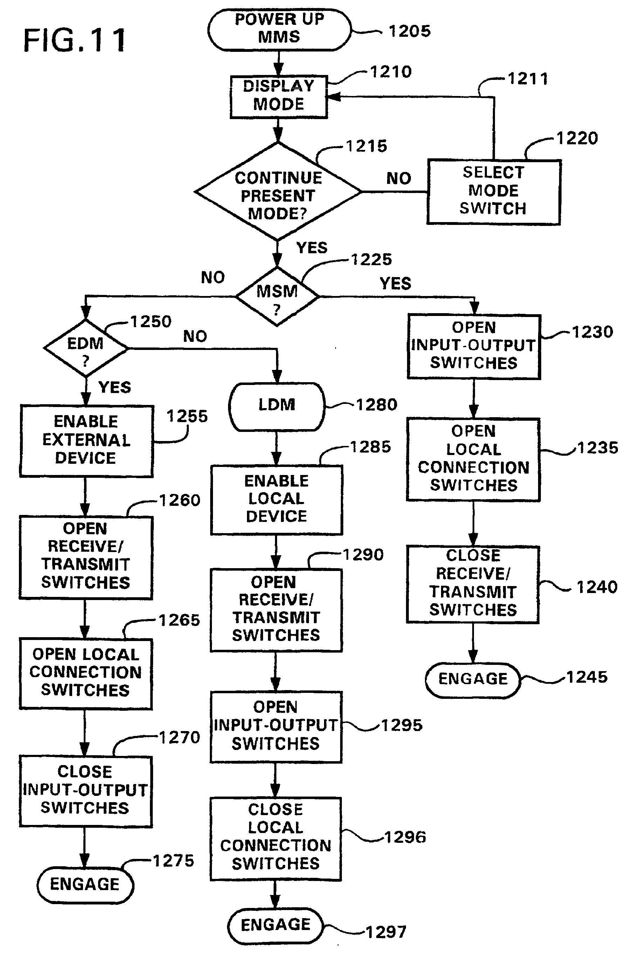

FIG. 11 depicts an exemplary decision tree for manually selecting a particular mode for operating a multi-function mobile station (MMS) according to the teachings of the present invention. Entering the decision tree at 1205 is the power up step for turning on the MMS. At 1210 is provided a display of the current mode of operation for the MMS after the power up 1205. A decision block 1215 determines if the user wants to continue operation within the current modal arrangement. If the NO branch is taken at 1215, the user may then manually select a desired mode as shown at 1220. A recursive decision loop 1211 is engaged by the user until a specific mode is chosen at the decision block 1215 by taking the YES branch therefrom.

Decision blocks 1225 and 1250 determine the entry to specific signal paths pursuant to the mode chosen by the user. By taking the YES branch at the decision block 1225, the base-band switches are accordingly set as shown at 1230, 1235 and 1240, in order to effectuate the mobile station mode (MSM) as discussed hereinabove in reference to FIG. 6. By taking the NO branch at 1225, an additional decision block 1250 is needed to determine appropriate base-band switching for the selected mode. With the YES branch taken at 1250, the user then enables the external device as shown at 1255. The base-band switches for effectuating signal paths to the external device whereby the MMS is in a slave mode are set as shown at 1260, 1265 and 1270. At 1275, the user then engages in establishing external device communication. By taking the NO branch at 1250, the entry to the signal paths pursuant to the local-device-mode is established. Upon enabling the local device as shown at 1285, the base-band switches are set as shown at 1290, 1295 and 1296 in order to effectuate local communication.

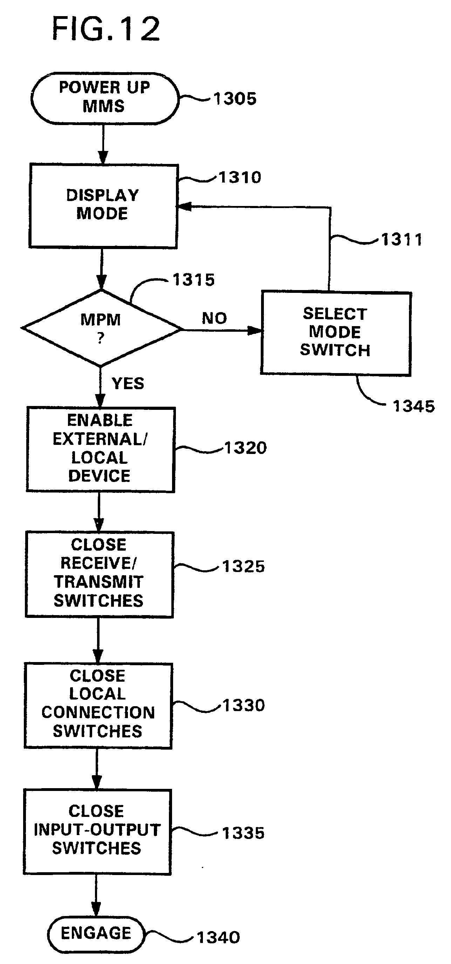

FIG. 12 depicts an exemplary decision tree for manually selecting and effectuating the multi-party-mode communication arrangement using a multi-function mobile station (MMS) according to the teachings of the present invention. As before, the user enters the decision tree at 1305 by taking the power up step for turning on the MMS. At 1310 is provided a display of the current mode of operation for the MMS after the power up 1305. A decision block 1315 is used to test if the displayed mode is the desired MPM. If the NO branch is taken at 1315, the user may then manually select the MPM arrangement as shown in step 1345. A recursive decision loop 1311 is engaged by the user until the MPM arrangement is selected at the decision block 1315 by taking the YES branch therefrom.

After taking the YES branch, the user then enables the external/local device for establishing a multi-party communication, as shown at 1320. The base-band switches for effectuating signal paths according to the present invention are set as shown at 1325 for communication between the MMS user and a network party; at 1330 for communication between the MMS user and the accessory user; and at 1335 for communication between the accessory user and the network party. At 1340, the three parties engage in multi-party communication. It is clear that the steps 1325, 1330 and 1335 may be performed in a different order, depending upon operating conditions and the user's needs.

Although presently preferred exemplary embodiments of the method and apparatus of the present invention have been illustrated in the accompanying Drawings and described in the foregoing Detailed Description, it will be understood that the invention is not limited to the embodiments disclosed, but is capable of numerous rearrangements, modifications and substitutions without departing from the invention as set forth and defined by the following claims. For example, it will be readily appreciated upon reference hereto that the multi-function mobile station of the present invention can be used to establish communication links with a computer which in preferred embodiments may be a multimedia computer of the type capable of transmitting and receiving audio signals. The signal paths will be the same as those disclosed for the answering machine application discussed hereinabove relative to FIG. 10. In addition, it will be readily seen that the side-tone transmission path between the microphone and the earphone can be included either within the MMS itself or in the external application. Preferably, an internal volume control disposed in the MMS may be used in the signal paths from the external or local devices in order to set the correct volume level for the earphone. Significantly, the base-band switching scheme comprising the cross-connect paths according to the teachings of the present invention can be applied to such dual-band/mode or multi-band/mode mobile stations as discussed in reference to FIG. 4. Moreover, the multi-functional mobile station, either single mode/band, multi-mode/band, or a combination thereof, can be digital or analog. The local communication signals, either in the external-device-mode or the local-device-mode, between the MMS and the external or local device can be presented either in the analog or digital domain. Thus, these signals can be signal-processed in any form known in the art. Moreover, these local audio signals can be processed anywhere in the path, that is, in the mobile station itself, or in the external device, or in the local device. For, example, such processing as volume control of the local audio signals can be implemented either in the mobile station itself, or in the device communicatively linked thereto. Accordingly, the cross-connect paths of the present invention can be implemented anywhere in the receive and transmit paths of a regular mobile station now known in the art. It can be readily appreciated by those skilled in the art that according to the teachings of the present invention, a single communication medium may be employed for both the external device communication (EDM arrangement) and the local device communication (LDM arrangement), thereby facilitating a local area communication system (LACS) wherein multiple communication devices can be integrated so as to enhance user convenience and inter-operability. The single communication medium may, according to the present invention, be electro-magnetic waves, microwaves, optic waves, radio waves, infra-red spectra, magnetic links or wireline links.

## Claims

1. A switching circuitry for a radio transceiver (420) having a microphone (345), a speaker (350), a receiver (325) and a transmitter (330) circuitry (325,330) for transceiving communication signals, the radio transceiver (420) is adapted to be selectively connected to at least one of an input node (340) for receiving signals generated by an external input device and an output node (335) for connection to an external output device, said switching circuitry is **characterised by**:
first means (390A,370B,360) adapted to selectively and independently effectuate a first connection between the output node (335) and at least one of said microphone (345) and said receiver (325);
second means (390B,365B,355) adapted to selectively and independently effectuate a second connection between the input node (340) and at least one of said speaker (350) and said transmitter (330); and
wherein the first means and the second means are adapted to operate independently from each other.

2. The switching circuitry (610-B) of claim 1, further comprising
a receive switch (365A) adapted to be independently actuated to operatively couple and decouple the transceiver circuitry (325,330) to the speaker (350), said receive switch (365A) is adapted to selectively routing signals provided by the transceiver circuitry (325,330) to the speaker (350);
an output switch (360) of said first means adapted to be independently actuated to operatively couple and decouple the transceiver circuitry (325,330) to the output node (335), said output switch (360) is adapted to selectively routing signals provided by the transceiver circuitry (325,330) to the output node (335) for further transmission on a first external communication link;
a first local connection switch (370B) of said first means adapted to be independently actuated to operatively couple and decouple the microphone (345) to the output node (335), said first local connection switch (370B) is adapted to selectively routing signals generated by the microphone (345) to the output node (335) for transmission on a first local communication link;
a transmit switch (370A) adapted to be independently actuated to operatively couple and decouple the transceiver circuitry (325,330) to the microphone (345), said transmit switch (370A) is adapted to selectively routing signals generated by the microphone (345) to the transceiver circuitry (325,330);
an input switch (355) of said second means adapted to be independently actuated to operatively couple and decouple the transceiver circuitry (325,330) to the input node (340), wherein said input switch (355) is further adapted to selectively routing signals from the input node (340) to the transceiver circuitry (325,330) on a second external communication link;
a second local connection switch (365B) of said second means adapted to be independently actuated to operatively couple and decouple the external input device to the speaker (350) via the input node (340), said second local connection switch (365B) is adapted to selectively routing signals from the input node (340) to the speaker (350) on a second local communication link and;
wherein the receive switch (365A), the output switch (360), the first local connection switch (370B), the transmit switch (370A), the input switch (355) and the second local connection switch (365B) are adapted to operate independently among and between each other.

3. The switching circuitry of claim 2, adapted to route signals provided by the transceiver circuitry (325,330) to the speaker (350) and route signals generated by the microphone (345) to the transceiver circuitry (325,330).

4. The switching circuitry of claim 1, wherein the external output device and the external input device are disposed in a headset of the type having a microphone.

5. The switching circuitry of claim 1, wherein the external output device and the external input device are disposed in a radio-enhanced phone interface device (920).

6. The switching circuitry of claim 1, wherein the external output device and the external input device are disposed in a corded phone.

7. The switching circuitry of claim 1, wherein the external output device and the external input device are disposed in an electronic data terminal of the type being selectably associated with a network.

8. The switching circuitry of claim 1, wherein the external output device and the external input device are disposed in a phone answering machine (1105).

9. The switching circuitry of claim 1, wherein the external output device and the external input device are disposed in a speaker system of the type having a microphone.

10. The switching circuitry of claim 1, wherein said radio transceiver (420) is a mobile station.

11. The switching circuitry of claim 10, wherein said mobile station with the switching circuitry is disposed in a housing, wherein the switching circuitry is adapted to communicate with a public land mobile network, and the mobile station is adapted to be selectively connected to at least one of the external input device via the input node (340) and the external output device (335) via the output node, said mobile station comprising:
the receiver (325) for receiving the incoming non-local communication signal;
the transmitter (330) for transmitting an outgoing non-local communication signal;
the microphone (345) adapted to be operatively connected and disconnected with said transmitter (330); and
the speaker (350) adapted to be operatively connected and disconnected with said receiver (325).

12. The mobile station of claim 11, wherein said switching circuitry is adapted to route said incoming non-local communication signal from said receiver (325) to said speaker (350), and further route said outgoing non-local communication signal generated by said microphone (345) to said transmitter (330).

13. The mobile station of claim 11, wherein said switching circuitry is adapted to route said incoming non-local communication signal from said receiver (325) to the external output device, and further route said outgoing non-local communication signal transmitted by the external input device to said transmitter (330).

14. The mobile station of claim 11, wherein said microphone (345) is adapted to generate an outgoing local communication signal, and said switching circuitry is adapted to route said outgoing local communication signal to the external output device, and further route an incoming local communication signal transmitted by the external input device, to said speaker (350).

15. The mobile station of claim 11, wherein the external input device and the external output device are disposed in a headset of the type including a microphone, and further wherein said switching circuitry is adapted to route said incoming non-local communication signal from said receiver (325) to the external output device, and further route said outgoing non-local communication signal transmitted by the external input device to said transmitter (330).

16. The mobile station of claim 11, wherein the external input device and the external output device are disposed in a radio-enhanced phone interface device (920) and said switching circuitry is adapted to route said outgoing local communication signal generated by said microphone (345) to the external output device, and further route said incoming local communication signal transmitted by the external input device to said speaker (350).

17. The mobile station of claim 11, wherein the external input device and the external output device are disposed in a corded phone and said switching circuitry is adapted to route said outgoing local communication signal generated by said microphone (345) to the external output device, and further route said incoming local communication signal transmitted by the external input device to said speaker (350).

18. The mobile station of claim 11, wherein the external input device and the external output device are disposed in an electronic data terminal of the type adapted to be selectably associated with a network and said switching circuitry is adapted to route said outgoing local communication signal generated by said microphone (345) to the external output device, and further route said incoming local communication signal transmitted by the external input device to said speaker (350).

19. The mobile station of claim 11, wherein the external input device and the external output device are disposed in a phone answering machine (1105) and said switching circuitry is adapted to route said outgoing local communication signal generated by said microphone (345) to the external output device, and further route said incoming local communication signal transmitted by the external input device to said speaker (350).

20. The mobile station of claim 11, wherein the external input device and the external output device are disposed in a phone answering machine (1105) and said switching circuitry is adapted to route said incoming non-local communication signal from said receiver (325) to the external output device, and further route said outgoing non-local communication signal transmitted by the external input device to said transmitter (330).

21. The mobile station of claim 11, wherein the external input device and the external output device are disposed in a speaker system of the type including a microphone and said switching circuitry is adapted to route said incoming non-local communication signal from said receiver (325) to the external output device, and further route said outgoing non-local communication signal transmitted by the external input device to said transmitter (330).

22. The mobile station of claim 11, adapted to effectuate said first connection by using at least one of a radio wave medium, an infra-red wave medium, a magnetic medium, an electro-magnetic wave medium, a microwave medium, an optic wave medium and a wire-line medium.

23. The mobile station of claim 11, adapted to effectuate said second connection by using at least one of a radio wave medium, an infra-red wave medium, a magnetic medium, an electro-magnetic wave medium, a microwave medium, an optic wave medium and a wire-line medium.

24. The mobile station of claim 11, wherein said first means further comprises at least one switch (360,370B), said at least one switch is adapted to be actuated to operatively couple alternately the external output device to said receiver (325) and said microphone (345).

25. The mobile station of claim 11, wherein said first means further comprises:
a first local switch (370B) disposed between said microphone and said external output device, wherein said first local switch (370B) is adapted to selectably and independently route signals generated by said microphone (345) to the external output device; and
a first non-local switch (360) disposed between said external output device and said receiver, wherein said first non-local switch (360) is adapted to selectably and independently route signals provided by said receiver (325) to the external output device.

26. The mobile station of claim 11, wherein said second means further comprises a first switch (365B,355), wherein said first switch (365B,355) is adapted to be independently actuataed to operatively couple alternately said external input device to said speaker (350) and said transmitter.

27. The mobile station of claim 26, wherein said second means further comprises:
a second switch (365B) disposed between said speaker and said external input device, wherein said second local switch (365B) is adapted to selectably and independently route signals transmitted by said external input device to said speaker; and
a non-local switch (355) disposed between said input and said transmitter, wherein said non-local switch (355) is adapted to selectably and independently route signals transmitted by the external input device to said transmitter.

28. The mobile station of claim 11, further comprising a side-tone switch (375) disposed between said speaker (350) and said microphone (345), said side-tone switch (375) is adapted to route a predetermined portion of signals generated by said microphone (345) to said speaker (350).

29. The mobile station of claim 11, wherein said first means includes a local transmitter adapted to transmit to the output node (335) signals provided at least alternately by said microphone (345) and by said receiver (325), and said second means includes a local receiver for receiving signals transmitted via the input node (340).

30. The mobile station of claim 29, further comprising a local interface unit (925), wherein said local interface unit (925) comprises said local transmitter and said local receiver, further wherein said local interface unit (925) is adapted to be operatively coupled to said microphone (345) and said speaker (350).

31. The mobile station of claim 11, wherein the external output device is adapted to receive via the output node (335) signals from said microphone (345) and said receiver (325), and wherein the external input device is adapted to transmit via the input node (340) signals to said speaker (350) and said transmitter (330).

32. A method of actuating switching circuitry for a radio transceiver (420) having a microphone (345), a speaker (350), and transceiver circuitry (325,330) for transceiving communication signals, wherein the radio transceiver (325,330) is adapted to be selectively connected to an external device having an external receiver and an external transmitter, **characterised by** the steps of:
powering up the radio transceiver (420);
determining if the radio transceiver is within a geographic range associated with the external device;
actuating independently a first switch element (370B) in response to said determination to operatively connect the microphone (345) with the external receiver, thereby providing signals generated by the microphone (345) to the external receiver;
actuating independently a second switch element (365B) in response to said determination to operatively connect the speaker (350) with the external transmitter thereby providing signals generated by the external transmitter to the speaker (350); and
wherein actuation of the first switch (370B) and
actuation of the second switch (365B) is performed independent of one another.

33. A method of claim 32, **characterised by** the steps of:
actuating independently a third switch element (360) in response to said determination to operatively connect the transceiver circuitry (325,330) with the external receiver, thereby routing signals provided by the transceiver circuitry (325,330) to the external receiver;
actuating independently a fourth switch element (355) in response to said determination to operatively connect the transceiver circuitry (325,330) with the external transmitter thereby providing signals generated by the external transmitter to the transceiver circuitry (325,330); and
wherein actuation of the first switch (360) and actuation of the second switch (355) is performed independent of one another.

## Patentansprüche

1. Vermittlungs-Schaltungsanordnung für einen Funktransceiver (420) mit einem Mikrophon (345), einem Lautsprecher (350), einer Empfänger-(325) und einer Sender-(330) Schaltungsanordnung (325, 330) zum Senden und Empfangen von Kommunikationssignalen, wobei der Funktransceiver (420) ausgebildet ist, selektiv verbunden zu sein mit wenigstens einem eines Eingabeknotens (340) zum Empfangen durch eine externe Eingabevorrichtung erzeugter Signale und eines Ausgabeknotens (335) zur Verbindung mit einer externen Ausgabevorrichtung, wobei die Vermittlungs-Schaltungsanordnung **gekennzeichnet ist durch**:
eine erste Einrichtung (390A, 370B, 360), die ausgebildet ist zum selektiven und unabhängigen Bewirken einer ersten Verbindung zwischen dem Ausgabeknoten (335) und wenigstens einem des Mikrophons (345) und des Empfängers (325);
eine zweite Einrichtung (390B, 365B, 355), die ausgebildet ist zum selektiven und unabhängigen Bewirken einer zweiten Verbindung zwischen dem Eingabeknoten (340) und wenigstens einem des Lautsprechers (350) und des Senders (330); und
wobei die erste Einrichtung und die zweite Einrichtung ausgebildet sind, voneinander unabhängig zu arbeiten.

2. Vermittlungs-Schaltungsanordnung (610-B) gemäß Anspruch 1, ferner umfassend:
einen Empfangsschalter (365A), der ausgebildet ist, unabhängig betätigt zu werden, um die Transceiver-Schaltungsanordnung (325, 330) wirksam mit dem Lautsprecher (350) zu koppeln und zu entkoppeln, wobei der Empfangsschalter (365A) ausgebildet ist zum selektiven Routen von durch die Transceiver-Schaltungsanordnung (325, 330) bereitgestellten Signalen an den Lautsprecher (350);
einen Ausgabeschalter (360) der ersten Einrichtung, der ausgebildet ist, unabhängig betätigt zu werden, zum wirksamen Koppeln und Entkoppeln der Transceiver-Schaltungsanordnung (325, 330) mit dem Ausgabeknoten (335), wobei der Ausgabeschalter (360) ausgebildet ist zum selektiven Routen von durch die Transceiver-Schaltungsanordnung (325, 330) bereitgestellten Signalen an den Ausgabeknoten (335) zur weiteren Übertragung auf einer ersten externen Kommunikationsverbindung;
einen ersten lokalen Verbindungsschalter (370B) der ersten Einrichtung, der ausgebildet ist, unabhängig betätigt werden zum wirksamen Koppeln und Entkoppeln des Mikrophons (345) mit dem Ausgabeknoten (335), wobei der erste lokale Verbindungsschalter (370B) ausgebildet ist zum selektiven Routen von durch das Mikrophon (345) erzeugten Signalen an den Ausgabeknoten (335) zur Übertragung auf einer ersten lokalen Kommunikationsverbindung;
einen Sendeschalter (370A), der ausgebildet ist, unabhängig betätigt zu werden zum wirksamen Koppeln und Entkoppeln der Transceiver-Schaltungsanordnung (325, 330) mit dem Mikrophon (345), wobei der Sendeschalter (370A) ausgebildet ist zum selektiven Routen von durch das Mikrophon (345) erzeugten Signalen an die Transceiver-Schaltungsanordnung (325, 330);
einen Eingabeschalter (355) der zweiten Einrichtung, der ausgebildet ist, unabhängig betätigt zu werden zum Koppeln und Entkoppeln der Transceiver-Schaltungsanordnung (325, 330) mit dem Eingabeknoten (340), wobei der Eingabeschalter (355) ferner ausgebildet ist zum selektiven Routen von Signalen von dem Eingabeknoten (340) an die Transceiver-Schaltungsanordnung (325, 330) auf einer zweiten externen Kommunikationsverbindung;
einen zweiten lokalen Verbindungsschalter (365B) der zweiten Einrichtung, der ausgebildet ist, unabhängig betätigt zu werden zum wirksamen Koppeln und Entkoppeln der externen Eingabevorrichtung mit dem Lautsprecher (350) über den Eingabeknoten (340), wobei der zweite lokale Verbindungsschalter (365B) ausgebildet ist zum selektiven Routen von Signalen von dem Eingabeknoten (340) an den Lautsprecher (350) auf einer zweiten lokalen Kommunikationsverbindung und;
wobei der Empfangsschalter (365A), der Ausgabeschalter (360), der erste lokale Verbindungsschalter (370B), der Sendeschalter (370A), der Eingabeschalter (355) und der zweite lokale Verbindungsschalter (365B) ausgebildet sind, untereinander und zwischeneinander unabhängig zu arbeiten.

3. Vermittlungs-Schaltungsanordnung gemäß Anspruch 2, die ausgebildet ist zum Routen von durch die Transceiver-Schaltungsanordnung (325, 330) bereitgestellten Signalen an den Lautsprecher (350) und zum Routen von durch das Mikrophon (345) erzeugten Signalen an die Transceiver-Schaltungsanordnung (325, 330).

4. Vermittlungs-Schaltungsanordnung gemäß Anspruch 1, wobei die externe Ausgabevorrichtung und die externe Eingabevorrichtung in einem Kopfsprechhörer des ein Mikrophon habenden Typs angeordnet sind.

5. Vermittlungs-Schaltungsanordnung gemäß Anspruch 1, wobei die externe Ausgabevorrichtung und die externe Eingabevorrichtung in einer funkerweiterten Telefonschnittstellenvorrichtung (920) angeordnet sind.

6. Vermittlungs-Schaltungsanordnung gemäß Anspruch 1, wobei die externe Ausgabevorrichtung und die externe Eingabevorrichtung in einem Schnurtelefon angeordnet sind.

7. Vermittlungs-Schaltungsanordnung gemäß Anspruch 1, wobei die externe Ausgabevorrichtung und die externe Eingabevorrichtung in einem elektronischen Datenendgerät des Typs angeordnet sind, der selektiv mit einem Netzwerk verknüpft ist.

8. Vermittlungs-Schaltungsanordnung gemäß Anspruch 1, wobei die externe Ausgabevorrichtung und die externe Eingabevorrichtung in einem Anrufbeantworter (1105) angeordnet sind.

9. Vermittlungs-Schaltungsanordnung gemäß Anspruch 1, wobei die externe Ausgabevorrichtung und die externe Eingabevorrichtung in einem Lautsprechersystem des ein Mikrophon habenden Typs angeordnet sind.

10. Vermittlungs-Schaltungsanordnung gemäß Anspruch 1, wobei der Funktransceiver (420) eine Mobilstation ist.

11. Vermittlungs-Schaltungsanordnung gemäß Anspruch 10, wobei die Mobilstation mit der Vermittlungs-Schaltungsanordnung in einem Gehäuse angeordnet ist, wobei die Vermittlungs-Schaltungsanordnung ausgebildet ist zum Kommunizieren mit einem öffentlichen Landmobilfunknetz, und die Mobilstation ausgebildet ist, selektiv mit wenigstens einer der externen Eingabevorrichtung über den Eingabeknoten (340) und der externen Ausgabevorrichtung (335) über den Ausgabeknoten verbunden zu sein, wobei die Mobilstation umfasst:
den Empfänger (325) zum Empfangen des ankommenden nicht-lokalen Kommunikationssignals;
den Sender (330) zum Übertragen eines abgehenden nicht-lokalen Kommunikationssignals;
das Mikrophon (345), das ausgebildet ist, wirksam mit dem Sender (330) verbunden und getrennt zu sein; und
den Lautsprecher (350), der ausgebildet ist, mit dem Empfänger (325) wirksam verbunden und getrennt zu sein.

12. Mobilstation gemäß Anspruch 11, wobei die Vermittlungs-Schaltungsanordnung ausgebildet ist zum Routen des ankommenden nicht-lokalen Kommunikationssignals von dem Empfänger (325) an den Lautsprecher (350), und zum weiteren Routen des durch das Mikrophon (345) erzeugten nicht-lokalen Kommunikationssignals an den Sender (330).

13. Mobilstation gemäß Anspruch 11, wobei die Vermittlungs-Schaltungsanordnung ausgebildet ist zum Routen des ankommenden nicht-lokalen Kommunikationssignals von dem Empfänger (325) an die externe Ausgabevorrichtung, und zum weiteren Routen des durch die externe Eingabevorrichtung übertragenen ausgehenden nicht-lokalen Kommunikationssignals an den Sender (330).

14. Mobilstation gemäß Anspruch 11, wobei das Mikrophon (345) ausgebildet ist zum Erzeugen eines ausgehenden lokalen Kommunikationssignals, und
wobei die Vermittlungs-Schaltungsanordnung ausgebildet ist zum Routen des ausgehenden lokalen Kommunikationssignals an die externe Ausgabevorrichtung, und zum weiteren Routen eines durch die externe Eingabevorrichtung übertragenen ankommenden lokalen Kommunikationssignals an den Lautsprecher (350).

15. Mobilstation gemäß Anspruch 11, wobei die externe Eingabevorrichtung und die externe Ausgabevorrichtung in einem Kopfsprechhörer des ein Mikrophon enthaltenden Typs angeordnet sind, und
wobei die Vermittlungs-Schaltungsanordnung ferner ausgebildet ist zum Routen des ankommenden nicht-lokalen Kommunikationssignals von dem Empfänger (325) an die externe Ausgabevorrichtung, und zum weiteren Routen des durch die externe Eingabevorrichtung übertragenen ausgehenden nicht-lokalen Kommunikationssignals an den Sender (330).

16. Mobilstation gemäß Anspruch 11, wobei die externe Eingabevorrichtung und die externe Ausgabevorrichtung in einer funkerweiterten Telefonschnittstellenvorrichtung (920) angeordnet sind, und wobei die Vermittlungs-Schaltungsanordnung ausgebildet ist zum Routen des durch das Mikrophon (345) erzeugten ausgehenden lokalen Kommunikationssignals an die externe Ausgabevorrichtung, und zum weiteren Routen des durch die externe Eingabevorrichtung übertragenen ankommenden lokalen Kommunikationssignals an den Lautsprecher (350).

17. Mobilstation gemäß Anspruch 11, wobei die externe Eingabevorrichtung und die externe Ausgabevorrichtung in einem Schnurtelefon angeordnet sind, und wobei die Vermittlungs-Schaltungsanordnung ausgebildet ist zum Routen des durch das Mikrophon (345) erzeugten ausgehenden lokalen Kommunikationssignals an die externe Ausgabevorrichtung, und zum weiteren Routen des durch die externe Eingabevorrichtung übertragenen ankommenden lokalen Kommunikationssignals an den Lautsprecher (350).

18. Mobilstation gemäß Anspruch 11, wobei die externe Eingabevorrichtung und die externe Ausgabevorrichtung in einem elektronischen Datenendgerät des Typs angeordnet sind, der ausgebildet ist, selektiv mit einem Netzwerk verknüpft zu sein, und wobei die Vermittlungs-Schaltungsanordnung ausgebildet ist zum Routen des durch das Mikrophon (345) erzeugten ausgehenden lokalen Kommunikationssignals an die externe Ausgabevorrichtung, und zum weiteren Routen des durch die externe Eingabevorrichtung übertragenen ankommenden lokalen Kommunikationssignals an den Lautsprecher (350).

19. Mobilstation gemäß Anspruch 11, wobei die externe Eingabevorrichtung und die externe Ausgabevorrichtung in einem Anrufbeantworter (1105) angeordnet sind, und wobei die Vermittlungs-Schaltungsanordnung ausgebildet ist zum Routen des durch das Mikrophon (345) erzeugten ausgehenden lokalen Kommunikationssignals an die externe Ausgabevorrichtung, und zum weiteren Routen des durch die externe Eingabevorrichtung übertragenen ankommenden lokalen Kommunikationssignals an den Lautsprecher (350).

20. Mobilstation gemäß Anspruch 11, wobei die externe Eingabevorrichtung und die externe Ausgabevorrichtung in einem Anrufbeantworter (1105) angeordnet sind, und wobei die Vermittlungs-Schaltungsanordnung ausgebildet ist zum Routen des ankommenden nicht-lokalen Kommunikationssignals von dem Empfänger (325) an die externe Ausgabevorrichtung, und zum weiteren Routen des durch die externe Eingabevorrichtung übertragenen ausgehenden nicht-lokalen Kommunikationssignals an den Sender (330).

21. Mobilstation gemäß Anspruch 11, wobei die externe Eingabevorrichtung und die externe Ausgabevorrichtung in einem Lautsprechersystem des ein Mikrophon enthaltenden Typs angeordnet sind, und wobei die Vermittlungs-Schaltungsanordnung ausgebildet ist zum Routen des ankommenden nicht-lokalen Kommunikationssignals von dem Empfänger (325) an die externe Ausgabevorrichtung, und zum weiteren Routen des durch die externe Eingabevorrichtung übertragenen ausgehenden nicht-lokalen Kommunikationssignals an den Sender (330).

22. Mobilstation gemäß Anspruch 11, ausgebildet zum Bewirken der ersten Verbindung durch wenigstens eines von einem Funkwellenmedium, einem Infrarotwellenmedium, einem magnetischen Medium, einem elektromagnetischen Wellenmedium, einem Mikrowellenmedium, einem optischen Wellenmedium und einem drahtgebundenen Medium.

23. Mobilstation gemäß Anspruch 11, ausgebildet zum Bewirken der zweiten Verbindung durch wenigstens eines von einem Funkwellenmedium, einem Infrarotwellenmedium, einem magnetischen Medium, einem elektromagnetischen Wellenmedium, einem Mikrowellenmedium, einem optischen Wellenmedium und einem drahtgebundenen Medium.

24. Mobilstation gemäß Anspruch 11, wobei die erste Einrichtung ferner wenigstens einen Schalter (360, 370B) umfasst, wobei der wenigstens eine Schalter ausgebildet ist, betätigt zu werden zum wirksamen alternierenden Koppeln der externen Ausgabevorrichtung mit dem Empfänger (325) und dem Mikrophon (345).

25. Mobilstation gemäß Anspruch 11, wobei die erste Einrichtung ferner umfasst:
einen ersten lokalen Schalter (370B), der zwischen dem Mikrophon und der externen Ausgabevorrichtung angeordnet ist, wobei der erste lokale Schalter (370B) ausgebildet ist zum selektiven und unabhängigen Routen von durch das Mikrophon (345) erzeugten Signalen an die externe Ausgabevorrichtung; und
einen ersten nicht-lokalen Schalter (360), der zwischen der externen Ausgabevorrichtung und dem Empfänger angeordnet ist, wobei der erste nicht-lokale Schalter (360) ausgebildet ist zum selektiven und unabhängigen Routen von durch den Empfänger (325) bereitgestellten Signalen an die externe Ausgabevorrichtung.

26. Mobilstation gemäß Anspruch 11, wobei die zweite Einrichtung ferner einen ersten Schalter (365B, 355) umfasst, wobei der erste Schalter (365B, 355) ausgebildet ist, unabhängig betätigt zu werden zum wirksamen alternierenden Koppeln der externen Eingabevorrichtung mit dem Lautsprecher (350) und dem Sender.

27. Mobilstation gemäß Anspruch 26, wobei die zweite Einrichtung ferner umfasst:
einen zweiten Schalter (365B), der zwischen dem Lautsprecher und der externen Eingabevorrichtung angeordnet ist, wobei der zweite lokale Schalter (365B) ausgebildet ist zum selektiven und unabhängigen Routen von durch die externe Eingabevorrichtung übertragenen Signalen an den Lautsprecher; und
einen nicht-lokalen Schalter (355), der zwischen der Eingabevorrichtung und dem Sender angeordnet ist, wobei der nicht-lokale Schalter (355) ausgebildet ist zum selektiven und unabhängigen Routen von durch die externe Eingabevorrichtung übertragenen Signalen an den Sender.

28. Mobilstation gemäß Anspruch 11, ferner einen Nebentonschalter (375) umfassend, der zwischen dem Lautsprecher (350) und dem Mikrophon (345) angeordnet ist, wobei der Nebentonschalter (375) ausgebildet ist zum Routen eines vorbestimmten Teilstücks eines durch das Mikrophon (345) erzeugten Signals an den Lautsprecher (350).

29. Mobilstation gemäß Anspruch 11, wobei die erste Einrichtung einen lokalen Sender enthält, der ausgebildet ist zum Übertragen, an den Ausgabeknoten (335), von wenigstens alternierend durch das Mikrophon (345) und den Empfänger (325) bereitgestellten Signalen, und wobei die zweite Einrichtung einen lokalen Empfänger zum Empfangen von über den Eingabeknoten (340) übertragenen Signalen enthält.

30. Mobilstation gemäß Anspruch 29, ferner eine lokale Schnittstelleneinheit (925) umfassend, wobei die lokalen Schnittstelleneinheit (925) den lokalen Sender und den lokalen Empfänger umfasst, wobei ferner die lokale Schnittstelleneinheit (925) ausgebildet ist, wirksam mit dem Mikrophon (345) und dem Lautsprecher (350) gekoppelt zu sein.

31. Mobilstation gemäß Anspruch 11, wobei die externe Ausgabevorrichtung ausgebildet ist zum Empfangen, über den Ausgabeknoten (335) von Signalen von dem Mikrophon (345) und dem Empfänger (325), und wobei die externe Eingabevorrichtung ausgebildet ist zum Übertragen, über den Eingabeknoten (340), von Signalen an den Lautsprecher (350) und den Sender (330).

32. Verfahren zum Betätigen einer Vermittlungs-Schaltungsanordnung für einen Funktransceiver (420) mit einem Mikrophon (345), einem Lautsprecher (350), und einer Transceiver-Schaltungsanordnung (325, 330) zum Senden und Empfangen von Kommunikationssignalen, wobei der Funktransceiver (325, 330) ausgebildet ist, selektiv mit einer externen Vorrichtung mit einem externen Empfänger und einem externen Sender verbunden zu sein, **gekennzeichnet durch** die Schritte zum:
Hochfahren des Funktransceivers (420);
Bestimmen, ob der Funktransceiver innerhalb eines mit der externen Vorrichtung verknüpften geographischen Bereiches ist;
unabhängiges Betätigen eines ersten Schaltelementes (370B) in Ansprechen auf das Bestimmen zum wirksamen Verbinden des Mikrophons (345) mit dem externen Empfänger, wodurch **durch** das Mikrophon (345) erzeugte Signale dem externen Empfänger bereitgestellt werden;
unabhängiges Betätigen eines zweiten Schaltelementes (365B) in Ansprechen auf das Bestimmen zum wirksamen Verbinden des Lautsprechers (350) mit dem externen Sender, wodurch die **durch** den externen Sender erzeugten Signale dem Lautsprecher (350) bereitgestellt werden; und
wobei die Betätigung des ersten Schalters (370B) und die Betätigung des zweiten Schalters (365B) unabhängig voneinander durchgeführt werden.

33. Verfahren gemäß Anspruch 32, **gekennzeichnet durch** die Schritte zum:
unabhängigen Betätigen eines dritten Schaltelementes (360) in Ansprechen auf das Bestimmen zum wirksamen Verbinden der Transceiver-Schaltungsanordnung (325, 330) mit dem externen Empfänger, wodurch **durch** die Transceiver-Schaltungsanordnung (325, 330) bereitgestellte Signale an den externen Empfänger geroutet werden; unabhängigen Betätigen eines vierten Schaltelementes (355) in Ansprechen auf das Bestimmen zum wirksamen Verbinden der Transceiver-Schaltungsanordnung (325, 330) mit dem externen Sender, wodurch **durch** den externen Sender erzeugte Signale der Transceiver-Schaltungsanordnung (325, 330) bereitgestellt werden; und
wobei die Betätigung des ersten Schalters (360) und die Betätigung des zweiten Schalters (355) unabhängig voneinander durchgeführt werden.

## Revendications

1. Agencement de circuits de commutation pour un émetteur-récepteur radio (420) possédant un microphone (345), un haut-parleur (350) et un agencement de circuits (325, 330) de récepteur (325) et d'émetteur (330) destiné à émettre et recevoir des signaux de communication, l'émetteur-récepteur radio (420) étant adapté pour être connecté sélectivement à au moins un noeud parmi un noeud d'entrée (340), destiné à recevoir des signaux produits par un dispositif d'entrée extérieur, et un noeud de sortie (335), destiné à être connecté à un dispositif de sortie extérieur, ledit agencement de circuits étant **caractérisé par** :
un premier moyen (390A, 370B, 360) adapté pour effectuer sélectivement et indépendamment une première connexion entre le noeud de sortie (335) et au moins un dispositif parmi ledit microphone (345) et ledit récepteur (325) ;
un second moyen (390B, 365B, 355) adapté pour effectuer sélectivement et indépendamment une seconde connexion entre le noeud d'entrée (340) et au moins un dispositif parmi ledit haut-parleur (350) et ledit émetteur (330); et
dans lequel le premier moyen et le second moyen sont adaptés pour fonctionner indépendamment l'un de l'autre.

2. Agencement de circuits de commutation (610-B) selon la revendication 1, comprenant en outre :
un commutateur de réception (365A), adapté pour être actionné indépendamment afin de coupler et de découpler opérationnellement l'agencement de circuits d'émission-réception (325, 330) au haut-parleur (350), ledit commutateur de réception (365A) étant adapté pour router sélectivement vers le haut-parleur (350) des signaux fournis par l'agencement de circuits d'émission-réception (325, 330) ;
un commutateur de sortie (360) dudit premier moyen, adapté pour être actionné indépendamment afin de coupler et de découpler opérationnellement l'agencement de circuits d'émission-réception (325, 330) au noeud de sortie (335), ledit commutateur de sortie (360) étant adapté pour router sélectivement des signaux fournis par l'agencement de circuits d'émission-réception (325, 330) vers le noeud de sortie (335), pour une retransmission sur une première liaison de communication extérieure ;
un premier commutateur de connexion locale (370B) dudit premier moyen, adapté pour être actionné indépendamment afin de coupler et de découpler opérationnellement le microphone (345) au noeud de sortie (335), ledit premier commutateur de connexion locale (370B) étant adapté pour router sélectivement des signaux produits par le microphone (345) vers le noeud de sortie (335), pour une transmission sur une première liaison de communication locale ;
un commutateur d'émission (370A), adapté pour être actionné indépendamment afin de coupler et de découpler opérationnellement l'agencement de circuits d'émission-réception (325, 330) au microphone (345), ledit commutateur d'émission (370A) étant adapté pour router sélectivement des signaux produits par le microphone (345) vers l'agencement de circuits d'émission-réception (325, 330) ;
un commutateur d'entrée (355) dudit second moyen, adapté pour être actionné indépendamment afin de coupler et de découpler opérationnellement l'agencement de circuits d'émission-réception (325, 330) au noeud d'entrée (340), dans lequel ledit commutateur d'entrée (355) est en outre adapté pour router sélectivement des signaux provenant du noeud d'entrée (340) vers l'agencement de circuits d'émission-réception (325, 330) sur une seconde liaison de communication extérieure ;
un second commutateur de connexion locale (365B) dudit second moyen, adapté pour être actionné indépendamment afin de coupler et de découpler opérationnellement le dispositif d'entrée extérieur au haut-parleur (350) via le noeud d'entrée (340), ledit second commutateur de connexion locale (365B) étant adapté pour router sélectivement des signaux provenant du noeud d'entrée (340) vers le haut-parleur (350) sur une seconde liaison de communication locale ; et
dans lequel le commutateur de réception (365A), le commutateur de sortie (360), le premier commutateur de connexion locale (370B), le commutateur d'émission (370A), le commutateur d'entrée (355) et le second commutateur de connexion locale (365B) sont adaptés pour fonctionner indépendamment les uns des autres.

3. Agencement de circuits de commutation selon la revendication 2, adapté pour router des signaux fournis par l'agencement de circuits d'émission-réception (325, 330) vers le haut-parleur (350) et pour router des signaux produits par le microphone (345) vers l'agencement de circuits d'émission-réception (325, 330).

4. Agencement de circuits de commutation selon la revendication 1, dans lequel le dispositif de sortie extérieur et le dispositif d'entrée extérieur sont disposés dans un casque du type possédant un microphone.

5. Agencement de circuits de commutation selon la revendication 1, dans lequel le dispositif de sortie extérieur et le dispositif d'entrée extérieur sont disposés dans un dispositif d'interface téléphonique à fonctions radio avancées (920).

6. Agencement de circuits de commutation selon la revendication 1, dans lequel le dispositif de sortie extérieur et le dispositif d'entrée extérieur sont disposés dans un téléphone filaire.

7. Agencement de circuits de commutation selon la revendication 1, dans lequel le dispositif de sortie extérieur et le dispositif d'entrée extérieur sont disposés dans un terminal électronique de données du type pouvant être sélectivement associé à un réseau.

8. Agencement de circuits de commutation selon la revendication 1, dans lequel le dispositif de sortie extérieur et le dispositif d'entrée extérieur sont disposés dans un répondeur téléphonique (1105).

9. Agencement de circuits de commutation selon la revendication 1, dans lequel le dispositif de sortie extérieur et le dispositif d'entrée extérieur sont disposés dans un système de haut-parleur du type possédant un microphone.

10. Agencement de circuits de commutation selon la revendication 1, dans lequel ledit émetteur-récepteur radio (420) est une station mobile.

11. Agencement de circuits de commutation selon la revendication 10, dans lequel ladite station mobile équipée de l'agencement de circuits de commutation est disposée dans un boîtier, dans lequel l'agencement de circuits de commutation est adapté pour communiquer avec un réseau mobile public terrestre et la station mobile est adaptée pour être sélectivement connectée à au moins un dispositif, parmi le dispositif d'entrée extérieur, via le noeud d'entrée (340), et le dispositif de sortie extérieur (335), via le noeud de sortie, ladite station mobile comprenant :
le récepteur (325), afin de recevoir le signal de communication entrant non local ;
l'émetteur (330), afin d'émettre un signal de communication sortant non local;
le microphone (345), adapté pour être connecté et déconnecté opérationnellement avec ledit émetteur (330) ; et
le haut-parleur (350), adapté pour être connecté et déconnecté opérationnellement avec ledit récepteur (325).

12. Station mobile selon la revendication 11, dans laquelle ledit agencement de circuits de commutation est adapté pour router ledit signal de communication entrant non local entre ledit récepteur (325) et ledit haut-parleur (350) et en outre pour router ledit signal de communication sortant non local produit par ledit microphone (345) vers ledit émetteur (330).

13. Station mobile selon la revendication 11, dans laquelle ledit agencement de circuits de commutation est adapté pour router ledit signal de communication entrant non local entre ledit récepteur (325) et le dispositif de sortie extérieur et en outre pour router ledit signal de communication sortant non local transmis par le dispositif d'entrée extérieur vers ledit émetteur (330).

14. Station mobile selon la revendication 11, dans laquelle ledit microphone (345) est adapté pour produire un signal de communication sortant local et ledit agencement de circuits de commutation est adapté pour router ledit signal de communication sortant local vers le dispositif de sortie extérieur et en outre pour router un signal de communication entrant local transmis par le dispositif d'entrée extérieur vers ledit haut-parleur (350).

15. Station mobile selon la revendication 11, dans laquelle le dispositif d'entrée extérieur et le dispositif de sortie extérieur sont disposés dans un casque du type possédant un microphone, et dans laquelle, en outre, ledit agencement de circuits de commutation est adapté pour router ledit signal de communication entrant non local entre ledit récepteur (325) et le dispositif de sortie extérieur et en outre pour router ledit signal de communication sortant non local transmis par le dispositif d'entrée extérieur vers ledit émetteur (330).

16. Station mobile selon la revendication 11, dans laquelle le dispositif d'entrée extérieur et le dispositif de sortie extérieur sont disposés dans un dispositif d'interface téléphonique à fonctions radio avancées (920) et ledit agencement de circuits de commutation est adapté pour router ledit signal de communication sortant local produit par ledit microphone (345) vers le dispositif de sortie extérieur et pour router en outre ledit signal de communication entrant local transmis par le dispositif d'entrée extérieur vers ledit haut-parleur (350).

17. Station mobile selon la revendication 11, dans laquelle le dispositif d'entrée extérieur et le dispositif de sortie extérieur sont disposés dans un téléphone filaire et ledit agencement de circuits de commutation est adapté pour router ledit signal de communication sortant local produit par ledit microphone (345) vers le dispositif de sortie extérieur et pour router en outre ledit signal de communication entrant local transmis par le dispositif d'entrée extérieur vers ledit haut-parleur (350).

18. Station mobile selon la revendication 11, dans laquelle le dispositif d'entrée extérieur et le dispositif de sortie extérieur sont disposés dans un terminal électronique de données du type adapté pour être sélectivement associé à un réseau et ledit agencement de circuits de commutation est adapté pour router ledit signal de communication sortant local produit par ledit microphone (345) vers le dispositif de sortie extérieur et pour router en outre ledit signal de communication entrant local transmis par le dispositif d'entrée extérieur vers ledit haut-parleur (350).

19. Station mobile selon la revendication 11, dans laquelle le dispositif d'entrée extérieur et le dispositif de sortie extérieur sont disposés dans un répondeur téléphonique (1105) et ledit agencement de circuits de commutation est adapté pour router ledit signal de communication sortant local produit par ledit microphone (345) vers le dispositif de sortie extérieur et pour router en outre ledit signal de communication entrant local transmis par le dispositif d'entrée extérieur vers ledit haut-parleur (350).

20. Station mobile selon la revendication 11, dans laquelle le dispositif d'entrée extérieur et le dispositif de sortie extérieur sont disposés dans un répondeur téléphonique (1105) et ledit agencement de circuits de commutation est adapté pour router ledit signal de communication entrant non local entre ledit récepteur (325) et le dispositif de sortie extérieur et pour router en outre ledit signal de communication sortant non local transmis par le dispositif d'entrée extérieur vers ledit émetteur (330).

21. Station mobile selon la revendication 11, dans laquelle le dispositif d'entrée extérieur et le dispositif de sortie extérieur sont disposés dans un système de haut-parleur du type possédant un microphone et ledit agencement de circuits de commutation est adapté pour router ledit signal de communication entrant non local entre ledit récepteur (325) et le dispositif de sortie extérieur et pour router en outre ledit signal de communication sortant non local transmis par le dispositif d'entrée extérieur vers ledit émetteur (330).

22. Station mobile selon la revendication 11, adaptée pour effectuer ladite première connexion en utilisant au moins l'un des vecteurs suivants : vecteur à ondes radio, vecteur à ondes infrarouges, vecteur magnétique, vecteur à ondes électromagnétiques, vecteur à micro-ondes, vecteur à ondes optiques et vecteur filaire.

23. Station mobile selon la revendication 11, adaptée pour effectuer ladite seconde connexion en utilisant au moins l'un des vecteurs suivants : vecteur à ondes radio, vecteur à ondes infrarouges, vecteur magnétique, vecteur à ondes électromagnétiques, vecteur à micro-ondes, vecteur à ondes optiques et vecteur filaire.

24. Station mobile selon la revendication 11, dans laquelle ledit premier moyen comprend en outre au moins un commutateur (360, 370B), ledit au moins un commutateur étant adapté pour être actionné afin de coupler, opérationnellement, le dispositif de sortie extérieur alternativement audit récepteur (325) et audit microphone (345).

25. Station mobile selon la revendication 11, dans laquelle ledit premier moyen comprend en outre :
un premier commutateur local (370B), disposé entre ledit microphone et ledit dispositif de sortie extérieur, dans lequel ledit premier commutateur local (370B) est adapté pour router sélectivement et indépendamment des signaux produits par ledit microphone (345) vers le dispositif de sortie extérieur ; et
un premier commutateur non local (360), disposé entre ledit dispositif de sortie extérieur et ledit récepteur, dans lequel ledit premier commutateur non local (360) est adapté pour router sélectivement et indépendamment des signaux fournis par ledit récepteur (325) vers le dispositif de sortie extérieur.

26. Station mobile selon la revendication 11, dans laquelle ledit second moyen comprend en outre un premier commutateur (365B, 355), dans laquelle ledit premier commutateur (365B, 355) est adapté pour être actionné indépendamment afin de coupler opérationnellement ledit dispositif d'entrée extérieur alternativement audit haut-parleur (350) et audit émetteur.

27. Station mobile selon la revendication 26, dans laquelle ledit second moyen comprend en outre:
un second commutateur (365B), disposé entre ledit haut-parleur et ledit dispositif d'entrée extérieur, dans laquelle ledit second commutateur local (365B) est adapté pour router sélectivement et indépendamment des signaux transmis par ledit dispositif d'entrée extérieur vers ledit haut-parleur ; et
un commutateur non local (355), disposé entre ladite entrée et ledit émetteur, dans laquelle ledit commutateur non local (355) est adapté pour router sélectivement et indépendamment des signaux transmis par le dispositif d'entrée extérieur vers ledit émetteur.

28. Station mobile selon la revendication 11, comprenant en outre un commutateur d'effet local (375) disposé entre ledit haut-parleur (350) et ledit microphone (345), ledit commutateur d'effet local (375) étant adapté pour router une portion prédéterminée de signaux produits par ledit microphone (345) vers ledit haut-parleur (350).

29. Station mobile selon la revendication 11, dans laquelle ledit premier moyen comprend un émetteur local adapté pour émettre vers le noeud de sortie (335) des signaux produits au moins alternativement par ledit microphone (345) et par ledit récepteur (325) et ledit second moyen comprend un récepteur local destiné à recevoir des signaux transmis par le noeud d'entrée (340).

30. Station mobile selon la revendication 29, comprenant en outre une unité d'interface locale (925), dans laquelle ladite unité d'interface locale (925) comprend ledit émetteur local et ledit récepteur local, dans laquelle, en outre, ladite unité d'interface locale (925) est adaptée pour être couplée opérationnellement audit microphone (345) et audit haut-parleur (350).

31. Station mobile selon la revendication 11, dans laquelle le dispositif de sortie extérieur est adapté pour recevoir via le noeud de sortie (335) des signaux provenant dudit microphone (345) et dudit récepteur (325), et dans laquelle le dispositif d'entrée extérieur est adapté pour transmettre via le noeud d'entrée (340) des signaux vers ledit haut-parleur (350) et ledit émetteur (330).

32. Procédé d'actionnement d'un agencement de circuits de commutation pour un émetteur-récepteur radio (420) possédant un microphone (345), un haut-parleur (350) et un agencement de circuits d'émission-réception (325, 330) destiné à émettre et recevoir des signaux de communication, dans lequel l'émetteur-récepteur radio (325, 330) est adapté pour être connecté sélectivement à un dispositif extérieur possédant un récepteur extérieur et un émetteur extérieur, **caractérisé par** les étapes consistant à :
mettre l'émetteur-récepteur radio (420) sous tension ;
déterminer si l'émetteur-récepteur radio se situe dans une zone géographique associée au dispositif extérieur ;
actionner indépendamment un premier élément commutateur (370B), en réponse à ladite détermination, afin de connecter opérationnellement le microphone (345) avec le récepteur extérieur, pour fournir ainsi des signaux produits par le microphone (345) au récepteur extérieur ;
actionner indépendamment un deuxième élément commutateur (365B), en réponse à ladite détermination, afin de connecter opérationnellement le haut-parleur (350) avec l'émetteur extérieur, pour fournir ainsi des signaux produits par l'émetteur extérieur au haut-parleur (350) ; et
dans lequel l'actionnement du premier commutateur (370B) et l'actionnement du deuxième commutateur (365B) sont effectués indépendamment l'un de l'autre.

33. Procédé selon la revendication 32, **caractérisé par** les étapes consistant à :
actionner indépendamment un troisième élément commutateur (360), en réponse à ladite détermination, afin de connecter opérationnellement l'agencement de circuits d'émission-réception (325, 330) avec le récepteur extérieur, pour fournir ainsi des signaux produits par l'agencement de circuits d'émission-réception (325, 330) au récepteur extérieur ;
actionner indépendamment un quatrième élément commutateur (355), en réponse à ladite détermination, afin de connecter opérationnellement l'agencement de circuits d'émission-réception (325, 330) avec l'émetteur extérieur, pour fournir ainsi des signaux produits par l'émetteur extérieur à l'agencement de circuits d'émission-réception (325, 330) ; et
dans lequel l'actionnement du premier commutateur (360) et l'actionnement du deuxième commutateur (355) sont effectués indépendamment l'un de l'autre.
